(19) Europäisches Patentamt
European Patent Office
Office européen des brevets

(11) Veröffentlichungsnummer: **0 050 702**
**B1**

(12) # EUROPÄISCHE PATENTSCHRIFT

(45) Veröffentlichungstag der Patentschrift: **08.08.84**

(51) Int. Cl.³: **A 22 C 13/00**

(21) Anmeldenummer: **81102379.5**

(22) Anmeldetag: **30.03.81**

(54) **Für Lebensmittel, insbesondere Wurstwaren geeignete Schlauchhülle mit einer Klebenaht, Verfahren zu ihrer Herstellung und ihre Verwendung zur Herstellung gekrümmter oder ringförmiger Würste.**

(30) Priorität: **25.10.80 DE 3040279**

(43) Veröffentlichungstag der Anmeldung: **05.05.82 Patentblatt 82/18**

(45) Bekanntmachung des Hinweises auf die Patenterteilung: **08.08.84 Patentblatt 84/32**

(84) Benannte Vertragsstaaten: **AT BE CH DE FR GB IT LI LU NL SE**

(56) Entgegenhaltungen:
**EP - A - 0 014 346**
**EP - A - 0 014 353**
**EP - A - 0 037 543**
**DE - C - 886 863**
**FR - A - 2 102 508**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Andrä, Klaus, Dr., Konrad-Adenauer-Strasse 10, D-6501 Zornheim (DE)**
Erfinder: **Hutschenreuter, Elfriede, Hardtstrasse 116, D-6208 Bad Schwalbach (DE)**
Erfinder: **Porrmann, Herbert, Dr., Imkerweg 10, D-6272 Niedernhausen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 050 702 B1

BUNDESDRUCKEREI BERLIN

**Beschreibung**

Die Erfindung bezieht sich auf eine Schlauchhülle von der im Oberbegriff des Anspruchs 1 genannten Art, auf ein Verfahren zu ihrer Herstellung und ihre Verwendung.

Schlauchhüllen aus einer Bahn, beispielsweise aus regenerierter Cellulose, die durch längsaxiales Falten und Verkleben der sich überlappenden längsaxial sich erstreckenden Randzonen hergestellt sind, sind bereits bekannt (US-A-2 148 884, US-A-2 226 442, US-A-2 685 769, US-A-2 685 770, US-A-2 757 495). Bei den bisher beschriebenen Verklebungen handelt es sich allerdings entweder um die Anwendung von Lösungsmitteln, mit denen die Oberfläche der Bahn angelöst und klebrig gemacht wird, wobei ein »Klebstoff« in situ auf der Bahnoberfläche erzeugt wird, oder um Bahnen, die mit einem thermoplastischen Harz überzogen sind oder aus einem thermoplastischen Material bestehen, das bei Anwendung von Wärme und Druck siegelfähig ist (US-A-2 773 773). In der US-A-2 653 432 werden als geeignete Harze z. B. auch Acrylsäureester genannt, die durch Anwendung von Wärme oder mit einem Lösungsmittel klebrig gemacht werden. Ferner wurde auch schon vorgeschlagen, eine saure Lösung eines wasserlöslichen, teilweise polymerisierten hitzehärtbaren Harzes als klebendes Mittel zu verwenden, wobei die Polymerisation des Harzes durch die Gegenwart einer Säure (pH 4,5—5,5) in der wäßrigen Lösung beschleunigt wird. In der US-A-2 607 696 werden als Beispiele für diese Harze Aminoplastharze, wie Harnstoff-Formaldehyd- oder Melamin-Formaldehyd-Harz, Keton-Formaldehyd-Harze und Phenolharze genannt, die bei 180 bis 220° C gehärtet werden und dabei die sich gegenseitig überlappenden aufeinander gepreßten Randbereiche verkleben. In der US-A-2 686 725 wird eine Schlauchhülle von der im Oberbegriff des vorliegenden Anspruchs 1 genannten Art beschrieben, wobei das hitzehärtbare Harz, z. B. Melamin-Formaldehyd-Harz, in saurer Lösung z. B. auf das noch feuchte und noch nicht getrocknete faserfreie Cellulosegel aufgebracht und auf das anschließend gehärtete Harz eine Heißsiegelschicht aus Polyäthylenharz in Form eines Bandes oder als Pulver aufgeschmolzen wird. Zum Verbinden der sich überlappenden Randbereiche der Cellulosehydratbahn wird das Polyäthylen unter Anwendung von Druck und erhöhter Temperatur geschmolzen, wobei die sich überlappenden Ränder miteinander hitzegesiegelt werden.

In ähnlicher Weise beschreibt die US-A-2 653 432 ein Verfahren zum Verbinden der überlappenden Ränder mit einem Streifen aus thermoplastischem Material, das beim Erhitzen klebrig wird.

Die Wursthülle der DE-A-1 908 851 besteht hingegen aus einer Kunststoffolie, wobei die Längsnaht durch Heißsiegeln der einander überlappenden Ränder hergestellt wird. Im Überlappungsbereich ist ein Aufreißband eingesiegelt, das aus einer Polyesterträgerfolie mit Klebstoffbeschichtung bestehen kann. Es ist auch bekannt, das Aufreißband auf der Außenseite der Schlauchhülle anzubringen (US-A-3 545 161).

Allen diesen Schlauchhüllen, sofern sie überhaupt aus natürlichem Polymeren bestehen, ist gemeinsam, daß sie nur relativ umständlich hergestellt werden können, nämlich bei hohen Temperaturen, bei langen Verweilzeiten bis zum Abbinden des Klebstoffs und unter Zuhilfenahme von Säuren oder organischen Lösungsmitteln, die nur schwer und mit sehr aufwendigen Maßnahmen aus der Schlauchhülle entfernt werden können. Ferner sind sie im Verklebungsbereich nicht ausreichend gas- und rauchdurchlässig. Aus diesen Gründen wurden seit vielen Jahren Schlauchhüllen aus natürlichem Polymeren, z. B. auf Basis von Cellulose, überwiegend nahtlos hergestellt, obwohl dieses Rundspinnverfahren wegen relativ langsamer Bahngeschwindigkeit sehr kosten-intensiv ist und nur begrenzte Schlauchdurchmesser erlaubt. Außerdem ist eine gleichmäßige Ausbildung von Schlauchdurchmesser und Wandstärke nur unvollkommen möglich, und Veredelungsprozesse, z. B. eine Innenbeschichtung, sind sehr kompliziert und aufwendig durchzuführen. Auch gibt es seit vielen Jahren kaum noch Veröffentlichungen auf dem Gebiet der mit einer Längsnaht versehenen Schlauchhüllen aus natürlichem Polymeren, die einen Hinweis geben könnten, wie die genannten Probleme überwunden werden könnten.

Ferner sind diese bekannten Schlauchhüllen nicht zur Herstellung gekrümmter Würste geeignet.

Für gewisse Arten von Würsten werden die künstlichen Wursthüllen aus natürlichem Material, insbesondere auf Basis von Cellulose, z. B. aus regenerierter Cellulose, in gekrümmter oder abgerundeter Ringform, sogenannten Kranzdärmen, hergestellt. Die Krümmung wird bisher durch einseitige Verdrehung während der Herstellung des Schlauches erzeugt. Beispielsweise werden bei einem dieser Verfahren (US-A-2 136 566) die in bekannter Weise aus Viskose hergestellten nahtlosen Hüllen aus koagulierten und danach regeneriertem Cellulosehydrat-Gel vor dem Trocknen mit Luft aufgeblasen und um einen beheizten Zylinder gewunden. Als Folge hiervon schrumpft eine Seite, d. h. die mit der heißen Oberfläche des Zylinders in Berührung kommende Seite der wendelförmig gewundenen nahtlosen Hülle, wodurch der spiralförmigen Hülle ein gewisser Grad von Stabilität verliehen wird. Anschließend wird das Trocknen der wendelförmigen Hülle in einem Tunnelofen zu Ende geführt. Auf diese Weise werden wendelförmig gewundene Schlauchhüllen für die Herstellung von ringförmig gewundenen Würsten erhalten.

Bei einem anderen bekannten Verfahren zur Herstellung von nahtlosen Kranzdärmen (US-A-2 925 621) wird eine Viskoselösung durch eine Ringschlitzdüse in ein Spinnbad extrudiert, das

eine koagulierende Wirkung auf die Viskose ausübt. Nachdem der erforderliche Stabilitätsgrad erreicht ist, wird der in dieser Weise erhaltene koagulierte aber noch nicht vollständig regenerierte Schlauch mit Luft oder einem Inertgas aufgeblasen und im aufgeblasenen Zustand in einer oder mehreren wendelförmigen Windungen um einen Zylinder gelegt. Dieser spiralförmig gewundene Schlauch aus koagulierter Viskose wird in regenerierte Cellulose umgewandelt, beispielsweise durch Eintauchen in ein Regenerierbad. Abschließend wird der nahtlose Schlauch aus regenerierter Cellulose den üblichen Reinigungs-, Nachbehandlungs- und Trockenmaßnahmen unterworfen.

Auch diese bekannten gekrümmten Wursthüllen werden somit nach dem Rundspinnverfahren hergestellt und zeigen die oben genannten allgemeinen Nachteile von nahtlos hergestellten Schläuchen.

Es war zwar weiterhin bereits bekannt, nahtlose Kranzdärme durch partielles Schrumpfen in Längsrichtung unter Hitzeeinwirkung herzustellen (US-A-3 679 435). Diese Schläuche bestehen allerdings vollständig aus einem synthetischen thermoplastischen Polymeren und sind außerdem nahtlos.

Es ist noch hinzuweisen auf die EP-A-0 037 543, die einen Stand der Technik nach Art. 54 (3) und (4) i. V. m. Art. 89 EPÜ darstellt. Die im Beispiel 1 dieser Druckschrift hergestellte Schlauchhülle zeigt eine Klebenaht, bei der die aneinanderstoßenden Ränder mit einem Klebeband verklebt werden. Die 12 µm dicke Trägerfolie des Klebebands besteht aus streckorientiertem Polyäthylenterephthalat und zeigt beim Erhitzen die für diese Folie übliche relativ geringe Schrumpfung von maximal etwa 2%.

Es ist deshalb Aufgabe der vorliegenden Erfindung, eine eine längsaxial sich erstreckende Klebenaht aufweisende Schlauchhülle der eingangs genannten Art, die zur Herstellung gekrümmter oder ringförmiger Wursthüllen verwendet werden kann, und ein Verfahren zu ihrer Herstellung vorzuschlagen, die auf relativ einfache und billige Weise, nämlich bei normalen Raumtemperaturen, kürzeren Verweilzeiten und ohne Zuhilfenahme von Säuren und zusätzlichen Lösungsmitteln durch Verkleben ihrer beiden längsaxialen Randbereiche hergestellt werden kann. Die nicht nahtlose Schlauchhülle muß geeignet sein zur Verpackung von Lebensmitteln, insbesondere Wurstmassen, d. h. die Schlauchhülle und insbesondere die Verklebungsnaht muß relativ hohen mechanischen und thermischen Belastungen, z. B. Dehnungsbelastungen und der Einwirkung von heißem Wasser, standhalten und den Geschmack und das Aussehen des Lebensmittels nicht beeinträchtigen.

Eine wesentliche Aufgabe der vorliegenden Erfindung ist ferner darin zu sehen, die Gas- und Rauchdurchlässigkeit der Verklebungsnaht zu ermöglichen bei gleichzeitig großer Reißkraft. Diese Ausbildung der Schlauchhülle ist zur Verwendung als Verpackung für zu räuchernde Lebensmittel vorgesehen.

Es ist weiterhin eine bedeutende Aufgabe der Erfindung, eine Schlauchhülle vorzuschlagen, die nach dem Raffen und nach dem Entfälteln durch das Einpressen von Wurstmasse eine Wurst von geradliniger Form ergibt und erst bei den anschließenden Prozessen, insbesondere beim Räuchern oder Brühen, eine gekrümmte Form annimmt. Eine solche Wursthülle hätte den Vorteil, daß sie nicht diskontinuierlich in Abschnitten, sondern kontinuierlich in Form eines langen, gerafften Schlauches auf herkömmlichen Füllanlangen mit Wurstmasse gefüllt werden kann.

Diese Aufgabe wird überraschenderweise gelöst mit der im Anspruch 1 genannten Schlauchhülle. Die Ansprüche 2 bis 11 geben weitere Ausführungsformen der Schlauchhülle an. Die Aufgabe wird ferner gelöst durch ein Verfahren zur Herstellung der Schlauchhülle mit den im Anspruch 12 genannten Merkmalen. Die Ansprüche 13 bis 16 beschreiben weitere Ausbildungen des Verfahrens.

Die Aufgabe wird außerdem gelöst durch die im Anspruch 17 angegebene Verwendung.

Die Bildung einer Schlauchhülle mit einer oder mehreren längsaxial sich erstreckenden Nähten durch Verklebung der Randbereiche der längsaxial sich erstreckenden Randzonen ist an sich bekannt, wozu auf die eingangs aufgeführten US-PS verwiesen wird.

Entsprechend der vorliegenden Erfindung wird ein um seine Längsachse gebogener, blatt- oder bahnförmiger rechteckiger Folienzuschnitt oder eine entsprechend gebogene endlose Folienbahn durch Verklebung der längsaxial sich erstreckenden Randbereiche in eine Schlauchhülle mit einer längsaxial sich erstreckenden Verbindungsnaht übergeführt. Diese Verklebung erfolgt durch Überlappung der Randzonen. Zwischen diesen sich überlappenden Randbereichen der Schlauchhülle ist ein längsaxial sich erstreckendes Band, ein Film- oder ein Folienstreifen, im folgenden als Folienstreifen bezeichnet, angeordnet. Weiterhin wird der Einfachheit halber im folgenden anstelle von »blatt- oder bahnförmigen Zuschnitten« und »endlosen Bahnen« nur von Bahnen gesprochen. Die Klebstoff enthaltende Schicht im Überlappungsbereich kann die Form eines Bandes, Fadens oder Streifens aufweisen, die beim Herstellen der Schlauchhülle zuerst auf die Randzonen der Bahn aufgetragen wird und/oder die sich beidseitig auf dem Folienstreifen vor dem Herstellen der Verbindungsnaht befindet. In einer anderen Ausführungsform sind die Randzonen in der Weise miteinander verbunden, daß die Ränder bündig, d. h. mit den Kanten zumindest im wesentlichen aneinanderstoßend, einander genähert werden und dann mit einem Folienstreifen, verklebt werden, der beide Randzonen überdeckt. Der Folienstreifen befindet sich dann auf der Außenseite oder Innenseite der Schlauchhülle, oder es werden kongruent zueinander verlaufende Folienstreifen verwendet, von denen

sich dann einer auf der Innenseite und einer auf der Außenseite der Schlauchhülle befindet. Der Folienstreifen zeigt vor der Herstellung der Verbindungsnaht auf einer seiner beiden Oberflächen eine Haftklebstoffschicht, die zum Verbinden der beiden aneinanderstoßenden Randzonen dient. Es ist auch möglich, die Haftklebstoffschicht auf die beiden Randzonen aufzubringen.

Der Folienstreifen hat zweckmäßigerweise eine Breite von 5 bis 15% des Schlauchumfangs und besteht aus zumindest in längsaxialer Richtung wärmeschrumpffähigem Material, insbesondere aus einer zumindest in Längsrichtung streckorientierten Folie aus thermoplastischem Kunststoff wie Polyester-, Polyvinylidenchlorid-, Polyvinylchlorid-, Polyamid-, Polyethylen-, Polypropylen-, Polystyrol- oder Polyacrylnitril-Folie oder auf Basis eines Copolymeren oder einem Folienverbund aus zwei oder mehr wärmeschrumpffähigen Folien. Unter Folienstreifen soll auch ein wenigstens in Längsrichtung wärmeschrumpffähiger Vliesstoff, z. B. ein adhäsiv, mechanisch oder thermisch verfestigter Faservliesstoff aus wirr oder geordnet abgelegten wärmeschrumpffähigen Spinnfasern, Filamenten oder multiplen Filamentgarnen aus synthetischen thermoplastischem Material, oder eine wärmeschrumpffähige Schaumfolie mit offenporiger oder geschlossenporiger Schaumstruktur aus thermoplastischem Kunststoff verstanden werden.

Die Herstellung von in Längsrichtung wärmeschrumpffähigen Folien und Fasern ist bekannt (z. B. US-A-2 461 975, US-A-2 767 435, GB-A-784 920). Hierzu wird der Film oder die Faser aus thermoplastischem Material oberhalb der Fließgrenze und unterhalb des kristallinen Schmelzpunktes gestreckt, so daß eine Verlängerung in Streckrichtung erfolgt und in diesem Zustand abgekühlt, wobei die gestreckte Form fixiert wird. Während der Formkörper bei Raumtemperatur seine Dimension nicht ändert, kann durch Erwärmen die durch die Streckung eingebaute inherente Spannung ausgelöst werden, wobei die Folie bzw. Faser das Bestreben zeigt, die vor der Streckung vorhanden gewesene Dimension wieder herzustellen.

Ein in Querrichtung vorhandenes im Vergleich zur Längsrichtung nur geringes Schrumpfvermögen der Folie bzw. Faser ist zur Lösung der Aufgabe der Erfindung nicht von Nachteil, da die Breite der Folie bzw. Faser relativ gering ist im Vergleich zu ihrer Länge. Ist das Schrumpfvermögen der Folie in ihrer Querrichtung allerdings größer als in ihrer Längsrichtung, so wird der Folienstreifen quer zur Bahnrichtung von der Folie abgeschnitten, so daß der Folienstreifen das größere Schrumpfvermögen dann in seiner Längsrichtung zeigt.

Wenn das Schrumpfvermögen des längsaxial an der Schlauchhülle sich erstreckende Folienstreifens durch Erwärmen zur Wirkung gebracht wird, krümmt sich die Schlauchhülle zur Kranzform. Dieser Vorgang wird erst nach dem Raffen und nach dem Füllen der Schlauchhülle mit Wurstmasse durchgeführt, da die noch nicht gekrümmte Schlauchhülle auf relativ einfache Weise gerafft werden kann und einfach zu füllen ist und überdies die Würste gekocht, gebrüht und/oder geräuchert werden müssen, so daß dann die gefüllten Wursthüllen die Kranzform annehmen. Vorzugsweise geht man daher von einem gestreckten Folienstreifen aus, dessen Schrumpfvermögen bei Erwärmen auf eine unter 100°C liegende Temperatur, insbesondere bei Temperaturen zwischen 60 und 85°C, wirksam wird.

Der bei Temperaturen zwischen 60 und 100°C sich ergebende Längenschrumpf des Folienstreifens, ausgelöst in einem Zeitraum von etwa 10 Minuten, liegt im Bereich von 5 bis 80%, vorzugsweise 10 bis 40%, insbesondere 15 bis 30%, je nach gewünschtem Krümmungsradius.

Ein solches Material ist beispielsweise eine Folie aus Polyäthylenterephthalat, die bei 90°C/10 Min. einen Schrumpf in Längsrichtung von etwa 25% zeigt, die mit einem Streckverhältnis von etwa 1 : 3 in Längsrichtung gestreckt worden ist und die eine Dicke von etwa 10 bis 40 µm hat.

Auch wärmeschrumpffähige mikroporöse Folien aus thermoplastischem Kunststoff sind geeignet, worunter auch Membranen zu verstehen sind, die bei der Reversomose, Ultrafiltration, Dialyse oder Hämofiltration oder als Batterien- oder Brennstoffzellen-Diaphragmen eingesetzt werden. Solche mikroporösen Folien werden beispielsweise hergestellt, indem man eine pulverisierte Substanz, beispielsweise Polystyrol, Stärke, Zucker, Natriumchlorid oder Natriumbicarbonat, mit dem Basismaterial mischt, einen Flächenkörper bildet und zur Porenbildung die pulverisierte Substanz extrahiert (US-A-3 852 224). Es ist auch möglich, feinpulverige thermoplastische Kunststoffe erhöhten Temperaturen auszusetzen, wobei man durch Sintern einen Körper mit mikroporöser Struktur erhält. Mittels eines anderen Verfahrens wird das in einem thermoplastischen Kunststoff absorbierte Gas in der Hitze ausgedehnt, wobei andererseits das Gas auch duch Zusatz eines in der Hitze gasbildenden Mittels erzeugt werden kann. Poröse Flächenkörper können auch gebildet werden, indem man ein organisches Polymeres mit zwei flüchtigen, miteinander mischbaren Lösungsmitteln mischt, das Gemisch in einer Schicht ausbreitet und die Lösungsmittel verflüchtigt, wobei das polymere Material unter Bildung einer porösen Struktur koaguliert. Das Polymere ist bei diesem Verfahren in dem einen Lösungsmittel schwer oder nicht löslich. Schließlich sind auch Verfahren bekannt, bei denen das polymere Material in einem Lösungsmittel gelöst wird und danach zur Koagulation mit einem flüssigen, mit dem Lösungsmittel mischbaren Fällmittel in Berührung gebracht wird. Diese mikroporöse Folien erhalten Wärmeschrumpffähigkeit analog den oben beschriebenen Folien und Fasern durch Strecken in Längsrichtung bei erhöhter Temperatur. Ihr Schrumpfvermögen sollte allerdings 15% nicht überschreiten, da eine stärkere

Verstreckung zu einer nachteiligen Veränderung der Porenstruktur führt. Somit ergibt sich für mikroporöse Folien ein Bereich von 5 bis 15% für den Schrumpfwert.

Für Nahrungsmittel, die geräuchert werden sollen, z. B. Brühwürste, deren Hülle gegebenenfalls vor dem Gebrauch entfernt wird oder bestimmte Käsearten, sind insbesondere perforierte, gelochte oder genadelte Folienstreifen geeignet oder die genannten Vliesstoffe, Schaumstoffolien und mikroporösen Folien, die aufgrund ihrer Struktur oder ihrer chemischen Zusammensetzung fähig sind, den Räucherrauch durch die Verbindungsnaht der Schlauchhülle durchtreten zu lassen, sofern diese Folien ausreichend wärmeschrumpffähig sind. Auch sind wärmeschrumpffähige Bänder aus engmaschigem Gewebe, Netzwerk oder Gitter, die z. B. aus Fäden in Kette und Schuß gewebt sind, als rauchdurchlässige wärmeschrumpffähige Folienstreifen zur Verbindung der Randzonen geeignet.

Auch kompakte Folienstreifen aus rauchdurchlässigem wärmeschrumpffähigem Material sind verwendbar, wobei dann eine zusätzliche rauchdurchlässige Struktur des Folienstreifens, z. B. in Form von Poren oder Lochungen, nicht erforderlich ist.

Zusätzlich ist bei der Verpackungshülle, sofern sie für zu räuchernde Nahrungsmittel verwendet werden soll, eine ausreichende Rauchdurchlässigkeit der Klebstoff enthaltenden Schicht und der Schlauchhülle vorzusehen, wie weiter unten noch ausgeführt wird.

Als Basismaterial für die Herstellung der Verpackungshülle dienen insbesondere Bahnen von Cellulose, worunter Zellglas, regenerierte Cellulose bzw. Cellulosehydrat und auch Cellulosederivate, wie Celluloseäther zu verstehen sind, aber auch Bahnen aus Proteinen, Kohlenhydraten, Kollagenen, Alginaten, Stärken und anderen natürlichen polymeren Materialien. So können Cellulosebahnen, die nach dem Viskoseverfahren (US-A-3 884 270), durch Denitrierung von Cellulosenitrat oder Hydrolyse anderer Celluloseester, z. B. Deacetylierung von Celluloseacetat mit wäßriger oder alkoholischer Alkalilösung (US-A-3 546 209) hergestellt wurden, eingesetzt werden. Auch andere Cellulosematerialien wie Celluloseäther, z. B. Alkyl- oder Hydroxyalkylcellulose oder Mischäther, können zu Schläuchen verklebt werden.

Es können auch Bahnen verwendet werden, die eine Faserverstärkung, insbesondere eine bahnförmige Faserverstärkung, z. B. eine Papierbahn, aufweisen, beispielsweise auch mit Fasern wie sie bei der Herstellung von Papier oder Reispapier verwendet werden, oder mit nativen Fasern wie Hanf- oder Flachsfasern, oder mit synthetischen Fasern wie Polyamid-, Polyester- oder Polyacrylnitril-Fasern. Die bahnförmige Faserverstärkung ist z. B. ein textiles Gebilde wie ein adhäsiv, mechanisch oder thermisch verfestigter Faservliesstoff aus wirr oder geordnet abgelegten Spinnfasern, Filamenten oder multiplen Filamentgarnen aus nativem oder synthetischem Material, ein Gewebe, Netzwerk, Gitter, Gewirke oder dergleichen. Bevorzugt jedoch sind Bahnen ohne Faserverstärkung.

Die Faserbahn wird vorzugsweise beidseitig mit einer Viskoselösung behandelt, insbesondere in eine Viskoselösung getaucht oder mit einer Viskoselösung beschichtet, z. B. mit Düsen, Walzen oder durch Sprühvorrichtungen, und anschließend in regenerierte Cellulose übergeführt. Es ist auch möglich, in die Viskose 10 bis 80 Gew.-% Verstärkungsfasern einzuarbeiten, die zweckmäßigerweise eine mittlere Faserlänge von 0,05 bis 15 mm aufweisen. Die Fasern bestehen aus organischen Kunstfasern, aus Naturfasern, z. B. Baumwollfasern oder aus Fibriden (US-A-2 999 788). Die Fasern enthaltende Viskose wird dann durch eine Düse in das Koagulationsbad ausgepreßt unter Bildung einer Gelbahn.

Die Viskoselösung wird üblicherweise hergestellt durch Umsetzung der aus Cellulose mit Natriumhydroxidlösung erhaltenen Alkalicellulose mit Schwefelkohlenstoff im alkalischen Medium; sie enthält meist noch 4 bis 20 Gew.-% Cellulose. Nach der Reifung wird die Viskose versponnen, d. h. koaguliert. Das Spinnbad enthält beispielsweise 10 bis 20 Gew.-% Schwefelsäure, ferner Natriumsulfat und/oder Ammoniumsulfat (GB-A-1 240 560).

In weiteren Stufen wird das aus Viskose-Gel bestehende faserverstärkte bahnförmige Produkt in saurem Medium, z. B. in verdünnter (kleiner/gleich 5 Gew.-%) Schwefelsäure, zu Cellulosehydrat-Gel regeneriert, zur Entfernung von Säure und Salzen mit Wasser gewaschen, mit z. B. Natriumsulfitlösung entschwefelt, gegebenenfalls durch ein Bleichbad und schließlich durch ein Weichmacherbad mit z. B. wäßriger 10- bis 20%iger Glycerin-, Sorbit- oder Glucoselösung (FR-A-1 385 394) geführt.

Das Cellulosehydrat-Gel wird durch intensive Trocknung bei 90 bis 140°C in regenerierte Cellulose übergeführt und durch Konditionierung auf einen Wassergehalt von etwa 5 bis 10 Gew.-% eingestellt. Die Cellulosehydratbahnen zeigen eine Dicke von 20 bis 50 µm entsprechend einem Flächengewicht von 27 bis 75 g/m².

Unter Haftvermittler in bezug auf Klebstoffe sind bekanntlich Stoffe oder Stoffgemische zu verstehen, die vor dem Klebstoffauftrag auf eine oder beide Klebflächen aufgebracht werden, um die Haftung zwischen Klebstoff und Klebflächen zu verbessern. Im vorliegenden Fall hat er die Aufgabe, die Haftkleberschicht auf der Bahn naßfest zu verankern. Er befindet sich zwischen der Haftkleberschicht und der Bahn.

Obwohl die haftvermittelnde Harzschicht im Prinzip nur im Bereich der zu verklebenden Flächen der endlosen Bahn vorhanden sein müßte, ist es aus technischen Gründen zweckmäßig, eine Oberfläche, für bestimmte Anwendungen oder überlappende Klebungen auch beide Oberflächen der Bahn, vollflächig mit einer oder zwei verschiedenen haftvermittelnden Harzschichten zu versehen. Zusätzlich kann die Bahn auf der die spätere Innenseite der Schlauchhülle bildenden

Oberfläche ein übliches Mittel zur Verbesserung der Schälbarkeit der Schlauchhülle oder eine gasundurchlässige Schicht aufweisen. Zu den ersten Mitteln zählen z. B. wasserlösliche Proteine, wie Gelatin, Eialbumin und Glutenin. Diese Mittel sind allerdings nur bei bestimmten haftvermittelnden Harzen erforderlich. Bei gehärteten, kationischen hitzehärtbaren Harzen auf der Innenseite der Schlauchhülle ist bereits ohne zusätzliche Mittel eine ausreichende Schälbarkeit gewährleistet.

Das im wesentlichen wasserunlösliche, haftvermittelnde Harz ist vorzugsweise ein gehärtetes, kationisches, hitzehärtbares Harz, das in ungehärtetem Zustand im wesentlichen wasserlöslich ist und durch Wärmeeinwirkung durch fortschreitende Kondensationsreaktion in wasserunlöslichen Zustand überführbar ist (US-A-3 378 379). Auch Vinyliden-Gruppen enthaltende Copolymerisate (US-A-2 748 027, US-A-2 961 323, US-A-2 961 340, US-A-3 108 017, US-A-3 144 425, US-A-3 826 676, DE-A-2 832 926) ergeben zusammen mit Haftklebstoffen hervorragend feste Nähte bei der Verklebung der Naht unter Ausbildung der Schlauchhülle, wobei eine zusätzliche wasserdampf- und sauerstoffsperrende Wirkung erzielt wird. Polyurethanharze, Nitrocellulose und andere, als wasserunlösliche Verankerungsmittel bekannte Polymere können ebenfalls eingesetzt werden.

Die Auswahl des wasserunlöslichen, haftvermittelnden Harzes hängt unter anderem ab von der späteren Verwendung der Schlauchhülle. Für Brühwürste, deren Hüllen gegenüber Wasserdampf und Rauch durchlässig sein sollen, werden vorzugsweise gehärtete, kationische hitzehärtbare Harze als Verankerungsmittel verwendet. Hierzu wird z. B. eine Bahn aus Cellulosehydrat mit einer wäßrigen Lösung überzogen, die bis zu 25 Gew.-% eines dispergierbaren, wärmehärtbaren Harzes enthält, und das überzogene Material so lange auf 65 bis 125°C erhitzt, bis der Feuchtigkeitsgehalt unter 10 Gew.-% liegt. Durch das Erhitzen wird das Harz zu seiner wasserunlöslichen Form gehärtet und geht eine dauerhafte Bindung mit der Oberfläche der Bahn ein. Vorzugsweise wird die Überzugslösung bei der Herstellung der Bahn aus Cellulosehydrat auf die bereits regenerierte, aber noch nicht getrocknete Bahn aus Cellulosehydrat-Gel aufgebracht. Dieser Auftrag kann vor, gleichzeitig oder nach der Behandlung der Gelbahn mit einem Weichmacher, wie z. B. einem Polyol, vorgenommen werden. Die Harzschicht hat ein Flächengewicht von etwa 30—300 mg/m$^2$, vorzugsweise 40 bis 75 mg/m$^2$.

Als geeignete Lösungsmittel für das hitzehärtbare Harz werden niedrige aliphatische oder aromatische Kohlenwasserstoffe, niedrige Alkohole oder Ester oder Mischungen dieser Lösungsmittel eingesetzt. Vorteilhaft wird eine wäßrige Lösung oder Dispersion verwendet.

Falls für bestimmte Anwendungen gewünscht, wird zusammen mit dem hitzehärtbaren Harz ein zusätzliches wasserabstoßendes Harz wie Paraffin, Montanwachs, Carnaubawachs und/oder geeignete Verdickungsmittel, wie Celluloseäther oder Stärke, auf die Schlauchhülle aufgetragen.

Die Schlauchhülle kann auch vor, vorzugsweise aber nach Aufbringen des hitzehärtbaren Harzes und vor dem Verkleben mit Beschriftungen oder dekorativen Mustern bedruckt werden, wobei neben dem bei der Herstellung von nahtlosen Wursthüllen üblichen Druckverfahren vorteilhafterweise noch weitere Druckmöglichkeiten sich anbieten, da im vorliegenden Fall die flache Bahn vor der Schlauchformung bedruckt werden kann.

Der Überzug aus hitzehärtbarem Harz ist beispielsweise frei von Pigmenten und organischen Farben und bildet somit eine klare Schicht, durch die eine eventuelle Bedruckung gut sichtbar bleibt. Es kann aber auch ein transparenter organischer Farbstoff verwendet werden, um der Verpackungshülle eine entsprechende Farbe zu verleihen.

Neben dem hitzehärtbaren Harz enthält die Schicht auf der Schlauchhülle im Bereich der Verbindungsnaht gegebenenfalls Pigmente, einen Weichmacher für das hitzehärtbare Harz und/oder ein Härtungsmittel für das hitzehärtbare Harz. Das hitzehärtbare Harz und der Weichmacher werden in einem geeigneten flüssigen Lösungs- bzw. Dispergiermittel aufgenommen, das vorteilhafterweise bei einer Temperatur verdampft werden kann, bei der gleichzeitig zumindest eine Vorhärtung des Harzes eintreten kann.

Als Beispiele für das hitzehärtbare Harz sind zu nennen: Harnstoff-Formaldehyd-, Melamin-Formaldehyd- und Phenol-Formaldehyd-Harze. Als bevorzugter Weichmacher für diese hitzehärtbaren Harze dienen weiche, nicht-härtbare Harze vom Alkyd-Typ oder auch Dibutylphthalat, Trikresylphosphate oder Dibutylsebacat.

Als Härter für das hitzehärtbare Harz kann beispielsweise Ammoniumthiocyanat, Toluolsulfonsäure, Maleinsäure oder Milchsäure eingesetzt werden. Diese Verbindungen verhalten sich wie Katalysatoren bei der Härtung der hitzehärtbaren Harze.

Insbesondere bevorzugte hitzehärtbare Harze sind Kondensationsprodukte von Polyamidpolyaminen oder aliphatischen Polyaminen oder von Polyamiden mit bifunktionellen Halohydrinen oder deren Derivaten wie z. B. Epichlorhydrin, wie sie beispielsweise in der US-A-2 573 956 oder in den GB-A-865 727 und GB-A-908 205 beschrieben sind. Ein besonders geeignetes Harz ist beispielsweise das Reaktionsprodukt aus aliphatischem 2,6-Polyamid, Äthylentriamin und Epichlorhydrin.

Als Polyamine kommen einfache Alkylendiamine in Betracht oder Polyalkylenpolyamine wie beispielsweise Diäthylentriamin, Triäthylentetramin, Tetraäthylenpentamin und die entsprechenden Polypropylenpolyamine, und Polybutylenpolyamine wie Dibutylentriamin. Die Polyamine werden zur Herstellung der entsprechenden Chlorhydrinharze mit mehr als einem Mol Epichlorhydrin je Mol Polyamin umgesetzt. Im allgemeinen werden von 1,5 bis 4,0 Mol Epichlorhydrin, meist 2 bis 3 Mol angewendet. Die Umsetzung erfolgt in wäßriger Lösung, bei mäßig erhöhter Temperatur (etwa 50° C), bis der gewünschte Vikositätsgrad erreicht ist. Vorzugsweise verwendet man Umsetzungsprodukte von Epichlorhydrin mit Dipropylentriamin oder mit Bis(3-Aminopropyl)methylamin, wobei man 2,8 bis 3,8 Mol Epichlorhydrin mit 1 Mol Polyamin umsetzt.

Die Polyamid-Polyamine sind Kondensationsprodukte einer gesättigten, aliphatischen, zweibasischen Säure, die 3 bis 8 Kohlenstoffatome im Molekül aufweist, mit einem der obengenannten Polyamine, das mindestens eine sekundäre und zwei primäre Amingruppen aufweist, wie beispielsweise die obengenannten Polyalkylenpolyamine. Vorzugsweise werden Diglykolsäure, Bernsteinsäure, Glutarsäure und Adipinsäure als zweibasische Säure verwendet. Es können auch Gemische zweibasischer Säuren verwendet werden. Die Gemische der Säuren können auch mehr als acht Kohlenstoffatome im Molekül aufweisende Säuren enthalten, sofern deren Anteil an der Mischung nicht verhindert, daß das daraus hergestellte Polyamin-Polyamid in Wasser echt löslich oder wenigstens kolloidal löslich ist. Ein Teil der Polyamine, die mit der zweibasischen Säure umgesetzt werden, kann durch Alkylendiamine ersetzt sein. Deren Anteil kann bis zu 30% betragen. Die Umsetzung zwischen dem Polyamin und der zweibasischen Säure wird bei etwa 110 bis 250° C, meist bei etwa 160 bis 210° C, durchgeführt. Etwa 0,8 bis 1,4 Mol der Säure werden je Mol Polyamin angewendet. Die erhaltenen Polyamin-Polyamide werden in wäßriger Lösung bei etwa 50° C mit 0,5 bis 1,8 Mol Epichlorhydrin je sekundäre Aminogruppe umgesetzt, vorzugsweise verwendet man etwa 0,9 bis 1,5 Mol Epichlorhydrin.

Das Harz wird in einer wäßrigen Lösung, die etwa 0,3 bis 2,0 Gew.-%, vorzugsweise 1 bis 1,3 Gew.-% des Chlorhydrinharzes enthält, auf die für die Beschichtung vorgesehene Bahn aufgetragen. Bei der, eventuell faserverstärkten, Cellulosebahn wird es vorzugsweise auf die noch feuchte, noch nicht getrocknete Bahn aus Cellulosehydrat-Gel aufgebracht. Man kann die wäßrige Lösung jedoch auch auftragen, nachdem die Cellulosebahn getrocknet worden ist, was zwar den Vorteil hat, daß man Lösungen mit geringerem Gehalt an Harz zur Erzielung der gleichen Wirkung benötigt, was jedoch gelegentlich zu ungleichmäßiger Imprägnierung führt. Nach dem Auftragen der wäßrigen Lösung des Verankerungsmittels wird die Bahn bei mäßiger Wärme (etwa 100° C) getrocknet.

Die Permeationseigenschaften der Verpakkungshülle im Verklebungsbereich werden durch die Verankerungsschicht aus dem gehärteten, kationischen, hitzehärtbaren Harz nicht oder nur unwesentlich beeinflußt. Diese Eigenschaft ist von besonderer Bedeutung für die Durchlässigkeit gegenüber Wasserdampf und Räucherrauch, wenn die Schlauchhülle für Dauerwurstwaren oder Brühwürste verwendet wird. Bei zu geringer Durchlässigkeit würde sich z. B. der typische rötlich-braune Farbton des geräucherten Wurstbräts nicht einstellen.

Unter Haftklebstoff wird im allgemeinen ein dauerklebriger Stoff verstanden, der in lösungsmittelfreier oder dispergiermittelfreier Form an den meisten Werkstoffoberflächen schon unter leichtem Andruck spontan haftet. Er wird auch als »Pressure sensitive adhesive« bezeichnet. Im vorliegenden Fall wird er entweder direkt in Form einer Dispersion, Lösung, z. B. in Benzin, Siedebereich 65 bis 95° C, Aceton, Essigester, Toluol, chlorierten Kohlenwasserstoffen oder in Lösungsmittelgemischen, z. B. Aceton/Benzin, oder Schmelze auf die zu verbindenden Randzonen der Bahn und/oder auf den wärmeschrumpffähigen Folienstreifen aufgebracht. Es ist aber auch möglich, die Haftklebstoffschicht zunächst als dünnen Film auf ein Trägerband aufzubringen, das aus einem antiadhäsiv ausgerüsteten Material, z. B. aus Siliconpapier oder aus siliconisierter Kunststoffolie, besteht. Der Haftklebstoff wird dann auf die zu verbindenden Randzonen der Bahn und/oder auf den Folienstreifen übertragen und danach das antiadhäsiv ausgerüstete Trägerband vom Haftklebstoff-Film abgezogen. In bevorzuger Ausführung wird der Haftkleber auf den zur Verbindung der Randbereiche der längsaxial sich erstreckenden Randzonen der Bahn verwendeten Folienstreifen aufgebracht. Anschließend wird der Folienstreifen zum Verkleben mit den Randzonen mit seiner Haftkleberschicht auf die Randzonen aufgedrückt.

Für den Fall der Überlappung der Randzonen wird vorzugsweise ein Folienstreifen mit beidseitiger Haftklebstoffbeschichtung verwendet. Dieser Folienstreifen wird mit einer seiner beiden klebenden Oberflächen auf eine der beiden längsaxial sich erstreckenden Randzonen der endlosen Bahn in längsaxialer Richtung ganzflächig aufgeklebt, während die andere klebende Oberfläche des Folienstreifens noch mit einem abziehbaren Schutzband abgedeckt ist. Danach wird der Schlauch unter Überlappung der beiden längsaxial sich erstreckenden Randzonen der Bahn geformt, wobei sich der Folienstreifen in der Überlappungszone zwischen den Randzonen befindet. Nach Abziehen des Schutzbandes von der zweiten klebenden Oberfläche wird diese mit der zweiten Randzone der Bahn verklebt.

Im Gegensatz zur Beschichtung der Bahn mit dem haftvermittelnden Harz sollte der Auftrag des Haftklebstoffs nicht über die gesamte Fläche der Bahn, sondern nur im gewünschten Verklebungsbereich erfolgen, d. h. entlang der beiden längsaxial sich erstreckenden Ränder und/oder auf der Oberfläche des Folienstreifens.

Als Rohstoff für den Haftklebstoff dienen vorzugsweise Polyacrylsäureester oder Polymethacrylsäureester, jedoch sind im Prinzip auch andere Haftklebstoffe geeignet, sofern sie die an sie gerichteten Forderungen, z. B. bezüglich der hohen Kochfestigkeit und physiologischen Unbedenklichkeit, erfüllen. Auch Dispersionhaftklebstoffe, z. B. auf Basis von Polyacrylsäureester oder Vinylacetat-Copolymerisaten, gegebenenfalls unter Zusatz von geeigneten Harzen, oder Schmelzhaftklebstoffe, die neben geeigneten Harzen Äthylen-Vinylacetat-Copolymere und Styrol-Butadien- bzw. Styrol-Isopren-Blockcopolymere enthalten, sind im Prinzip geeignet, doch muß im Einzelfall geprüft werden, ob diese Haftklebstoffe die an sie gerichteten Forderungen in befriedigendem Maße erfüllen können.

Der Haftklebstoff besteht aus einem hochpolymeren Basisharz, das die Kohäsionseigenschaft und die spezifische Haftung bestimmt, und gewöhnlich einem klebrigmachenden Harz, das auch durch niedermolekulare Anteile des Basispolymeren ersetzt sein kann. Ein solches Harz wird überwiegend in gelöster Form zum Basisharz gegeben. Verwendung können z. B. finden:

Naturharze, wie Balsamharze, modifizierte Naturharze, z. B. auf Basis von Hydrobietylphthalat oder Estern des Kolophoniums, Polyterpen-, Terpenphenol-, Cumaron-, Inden-, Keton- und Kohlenwasserstoffharze. Durch den Zusatz von klebrigmachenden Harzen wird zwar die Oberflächenklebrigkeit und Schälfestigkeit erhöht, doch kann hierbei gegebenenfalls eine Verminderung der Kohäsion eintreten. Zur Erhöhung der Kohäsion sowie der Wärmestandfestigkeit und Scherfestigkeit der Verklebung ist es z. B. möglich, das Basisharz nach dem Auftrag auf den verbindenden Folienstreifen oder auf die Bahnoberfläche zu vernetzen, z. B. mit chemischen Zusätzen bei Raumtemperatur oder thermisch durch 5- bis 15minütiges Erwärmen auf 130 bis 140°C, wobei auch eine wesentlich verbesserte Heißwasserbeständigkeit der Klebenaht erzielt werden kann. Hierzu ist es erforderlich, dem Klebstoff Vernetzungsmittel zuzusetzen, die mit reaktionsfähigen Gruppen des Polymeren unter Vernetzung reagieren, oder man verwendet als Basisharz ein Homo- oder Copolymerisat, in dem reaktive, d. h. vernetzbare Comonomere mit funktionellen Gruppen, z. B. Carboxyl-, Amid-, Amino-, Methylol- oder Hydroxylgruppen, einpolymerisiert sein können, die die Hafteigenschaften verbessern und/oder eine begrenzte Vernetzung des Klebstoffilms ermöglichen. Im allgemeinen sind diese Komponenten mit funktionellen Gruppen zwar von Vorteil, denn sie steigern die Kohäsion des Haftkleberfilms, doch sind sie nicht unbedingt erforderlich. Als Beispiele für solche Copolymerisate sind zu nennen: anionenaktive Copolymerisate aus Acrylsäureestern, Vinylacetat, ungesättigter Carbonsäure, wie Acrylsäure, Methacrylsäure, Itaconsäure, und einer Glycidylverbindung, wie Glycidylacrylat oder Glycidylmethacrylat, Copolymerisate mit bifunktionellen Monomeren wie Triäthylenglykoldimethacrylat oder -diacrylat, Tetramethylenglykoldiacrylat oder -dimethacrylat, Copolymerisate von Acrylsäureestern, 1-Halogencarbonsäurevinylester, wie z. B. Chloressigsäurevinylester, 1,2-ungesättigten Carbonsäuren, wie Acrylsäure, oder ungesättigten Dicarbonsäuren, und als 4. Komponente eine Hydroxylgruppen enthaltende polymerisierbare Einheit, Copolymerisate von N-Methylolacrylsäureamid (oder N-Methylolmethacrylsäureamid) mit Acrylsäureestern (bzw. Methacrylsäureestern), die noch freie, nicht veresterte Carboxylgruppen aufweisen, wobei dieses Copolymerisat thermisch unter Wasserabspaltung vernetzt wird. Ferner dient als reaktives Comonomeres auch N-(1,1-Dimethyl-3-oxo)butyl-acrylamid

$$CH_2=CH-CO-NH-C(CH_3)_2-CH_2-CO-CH_3$$

Die Doppelbindung gestattet die Copolymerisation, während die Keto-Gruppe und die H-Atome benachbart zur Keto-Gruppe die Vernetzungsreaktion ermöglichen. Die Vernetzung kann durch Erhitzen mit Peroxiden eingeleitet werden. Ein geeigneter vernetzbarer Haftkleber enthält beispielsweise ein Copolymerisat auf Basis von Acrylsäureestern unter Mitverwendung von Acrylnitril und carboxylgruppenhaltigen Monomeren, die bei Zugabe von Laugen oder Salzen ein- oder mehrwertiger Metalle, wie z. B. Ammoniak, Alkalilauge oder Aluminiumsalz, bereits kalt, d. h. bei Raumtemperatur, vernetzt werden. Als weitere Comonomere sind Acrylsäurehydrazide und Acrylhydrazone in Acrylsäureester enthaltenden Copolymerisaten zu nennen.

Für die Schlauchhülle aus Cellulosehydrat werden besonders vorteilhaft Polyacrylsäureester als Haftklebstoffe verwendet, wobei die Säuregruppen mit einem oder mit verschiedenen aliphatischen Alkoholen, mit 1 bis 12 C-Atomen, insbesondere aber mit 4 bis 8 C-Atomen, wie z. B. Butylalkohol oder 2-Äthylhexanol, verbessert sind.

Die Klebstoffschicht kann noch weitere nichtklebende Zusätze enthalten, wie sie bei Klebstoffen an sich üblich sind, z. B. hochviskose Verdickungsmittel auf Basis von Homo- oder Copolymerisaten von polyacrylsauren Salzen oder Polyvinylpyrrolidon, Konservierungsmittel, um die Klebstoffschicht vor dem Befall durch Mikroorganismen zu schützen, Netzmittel, Weichmacher z. B. auf Basis von Phthalsäureestern mit geradkettigen (Butanol) oder verzweigten (2-Äthylhexanol) Alkoholen, Füllstoffe wie Kaolin, Glaskugeln, Kreide, Quarzmehl, Mikrodolomit, Schwerspat, feinkörnigen Sand, Zinkoxid und Pigmente sowie organische und anorganische Farbstoffe in Pulver- oder Schuppenform.

Die Gesamtbreite des Klebstoffauftrags wird je nach gewünschten Festigkeitswerten und Kalibern zwischen etwa 3 bis 70 mm gewählt und beträgt vorteilhafterweise 5 bis 15% des späteren Hüllenumfanges. Bei Verwendung eines wärmeschrumpffähigen Folienstreifens mit Haftklebstoffschicht zur überlappenden Verbindung einer aus den beiden Randzonen der Bahn gebildeten Stoßnaht ist ein entsprechend doppelt so breiter Klebstoffauftrag erforderlich. Die Dicke der Klebstoffschicht ist etwa 20 bis 150 μm, vorzugsweise etwa 40 bis 50 μm.

Mit Haftklebstoffen hergestellte Bindungen lassen sich bekanntlich mehrmals lösen und wieder zusammenfügen. Es ist deshalb völlig überraschend, daß gerade diese Klebstoffe in Kombination mit einem der obengenannten haftvermittelnden Harze als Grundierschicht beim Verkleben von Bahnen unter Ausbildung von Schlauchhüllen eine ausreichend feste Naht bilden. Besonders bei der Herstellung von Würsten, bei der die Naht beim Brühen der Wurst längere Zeit heißem Wasser von etwa 80° C ausgesetzt ist, sowie beim Raffen, Füllen, Abdrehen, Abbinden, Klippen und dergleichen, wenn die Naht hoher mechanischer Belastung ausgesetzt ist und Dimensionsänderungen eintreten, hat sich gezeigt, daß diese Kombination aus haftvermittelndem Harz und Haftklebstoff, auch wegen dessen elastischen Charakters, den früher beschriebenen Klebstoffen sogar überlegen ist. So zeigen die Haftklebstoffe aufgrund ihrer Dauerklebrigkeit den Vorteil, daß die zu verbindenden Teile auf schnelle und einfache Weise mit ausreichender Haftfestigkeit gegenüber scherender Belastung miteinander verklebt werden können. Unter scherender Belastung ist das Einwirken von tangentialen Zugkräften auf die Klebenaht senkrecht zur Längsachse der Schlauchhülle zu verstehen.

Wie sich zeigte, liegt die Reißkraft von Klebestellen mit 35 bis 45 N/15 mm Probenbreite im gleichen Bereich wie die Reißkraft des Materials der Schlauchhülle.

Es hat sich allerdings gezeigt, daß eine in üblicher Weise aufgetragene Haftkleberschicht gewöhnlich eine ausreichende Rauchdurchlässigkeit nicht gewährleistet. Mit Wurstbrät gefüllte, geklebte Schlauchhüllen, z. B. aus Celluloseregenerat, zeigen nach dem Räuchern im Bereich der vollflächigen Verklebungsnaht keine oder nur unvollständige Räucherfarbe.

Es ist bekannt, daß die Räucherfärbung durch Reaktion von Phenolen und Carboxylverbindungen mit Proteinen zustande kommt, wobei ihre Intensität und Haltbarkeit besonders vom Wassergehalt der Hülle, vom pH-Wert des Substrats sowie von Dauer und Höhe der Erhitzung abhängen. Diese Substanzen und die den Hauptbestandteil im Rauch darstellenden flüchtigen Carbonsäuren, die für die Färbung besonders maßgeblich sind, müssen deshalb den Nahtbereich der Schlauchhülle passieren können.

Zur Verbesserung der Rauchdurchlässigkeit wird deshalb erfindungsgemäß vorgeschlagen, die Haftklebstoffschicht nicht vollflächig auf die Bahn bzw. den Folienstreifen aufzubringen, sondern mit Unterbrechungen oder Ausnehmungen. Die Haftklebstoffschicht kann auch in Streifen oder punktförmig gerastert aufgetragen werden, z. B. mit einer profilierten Walze, die der Haftklebstoffschicht eine Struktur verleiht. Die Auftragswalze kann auch eine Textilstruktur oder eine Bürstenoberfläche aufweisen.

Besonders vorteilhaft ist der Antrag einer Haftkleberdispersion, z. B. in einer regelmäßigen Punkt- oder Linienrasterstruktur, im Rotationssiebdruck oder Tiefdruck, der mit einer Geschwindigkeit bis zu etwa 100 m/Min. durchgeführt werden kann. Die Schichtdicke des Haftklebers von 25 bis 30 μm bei einer Flächenabdekkung von 40 bis 60% ergibt eine ausgezeichnete Rauchdurchlässigkeit bei ausreichender Festigkeit der Verbindungsnaht. Der gleiche Erfolg wird erreicht durch Öffnungen, Poren oder Peforationen der Haftkleberschicht und gegebenenfalls auch der Randbereiche der Bahn und des Folienstreifens, wobei der Durchmesser dieser Durchlässe auch im Mikro- oder Nanometerbereich liegen kann. Diese Öffnungen, Poren oder Perforationen der Klebstoffschicht, der Bahn bzw. des Folienstreifens können mechanisch vor oder nach dem Herstellen der Schlauchform bzw. Klebenaht erzeugt werden, z. B. durch Stanzen, Prägen, Lochen oder Nadeln der mit der Klebstoffschicht versehenen Randzonen bzw. Folienstreifens, wobei der Durchmesser etwa 0,2—1,2 mm ist. Geeignete Durchlässe lassen sich auch auf chemischem Weg, z. B. durch partielles Ablösen der Haftkleberschicht von den Randzonen oder von dem Folienstreifen vor dem Bilden der Klebenaht, erzeugen.

Es kann ferner eine extrahierbare pulverförmige Substanz, beispielsweise ein Polymeres wie Stärke, Polystyrol oder Zucker, oder ein Salz, z. B. Natriumchlorid oder Natriumbicarbonat, in den Haftklebstoff eingearbeitet werden, welche nach dem Auftragen des Haftklebstoffs auf den Folienstreifen oder auf die längsaxial sich erstreckenden Randzonen der Bahn unter Bildung von Poren in der Klebstoffschicht herausgelöst wird. Es ist auch möglich, dem Haftklebstoff einen rauchdurchlässigen Zusatzstoff beizumischen, z. B. eine poröse Substanz oder organische Pigmente mit hoher Rauch- bzw. Gasdurchlässigkeit. Auch Fällungsreaktionen, wie sie bei der Herstellung von mikroporösen Folien und Membranen bekannt sind, können die Rauch- bzw. Gasdurchlässigkeit der Haftkleberschicht verbessern. Hierzu wird der Haftklebstoff in zwei flüchtigen, miteinander mischbaren Lösungsmitteln gemischt, das Gemisch auf einen Trägerfilm oder auf den zu verbindenden Randzonen ausgebreitet und die Lösungsmittel verflüchtigt, wobei das polymere Material unter Bildung einer porösen Struktur koaguliert. Der Haftklebstoff oder polymere Teile des Haftklebstoffs sind hierbei in dem einen Lösungsmittel schwer oder nicht löslich. Andererseits kann der Haftklebstoff auch in einem Lösungsmittel gelöst oder dispergiert werden und, z. B. nach Auftrag auf die Verbindungsflächen der Bahn, zur Koagulation mit einem flüssigen, mit dem Lösungsmittel mischbaren Fällmittel behandelt werden. Zur Verbesserung der Gas- und Rauchdurchlässigkeit können der Haftkleberschicht auch feinpulverige thermoplastische Kunststoffe zugesetzt werden, die bei erhöhter Temperatur durch Sintern eine mikroporöse Struktur in dieser Schicht bilden. Auch mit dem Zusatz von Gasen, z. B. Luft, Stickstoff, Kohlendioxid, oder fluorierten Kohlenwasserstoffen, in Form kleiner Blasen, die gegebenenfalls in der Hitze ausgedehnt werden, läßt sich die Gas- und Rauchdurchlässigkeit der Haftkleberschicht verbessern, wobei diese Schicht z. B. auf die Randzonen der Bahn oder auf den Folienstreifen aufgesprüht wird. Das Gas kann auch durch Zusatz eines in der Hitze gasbildenden Mittels, z. B. Azoverbindungen oder Carbonate, erzeugt werden.

Die Haftklebstoffschicht kann auch, eventuell zusätzlich, ein textiles flächenhaftes, streifenförmiges, ketten- oder fadenförmiges Gebilde, z. B. einen adhäsiv, mechanisch oder thermisch verfestigten Faservliesstoff aus wirr oder geordnet abgelegten Spinnfasern, Filamenten oder multiplen Filamentgarnen aus nativem oder synthetischem Material, ein Gewebe, Netzwerk, Gitter oder dergleichen oder eine Schwamm- oder Schaumstoffolie, insbesondere mit offenporiger Struktur, enthalten.

Wie sich überraschenderweise gezeigt hat, sind die beschriebenen Ausführungsformen der Schlauchhülle mit guter Rauchdurchlässigkeit im Verklebungsbereich ausreichend stabil und mechanisch und thermisch belastbar.

Sofern jedoch eine gasundurchlässige Schlauchhülle hergestellt werden soll, besteht das haftvermittelnde wasserunlösliche Harz aus einem Vinylidenharz, das mit einem Flächengewicht von gewöhnlich 3 bis 12 g/m$^2$ vorhanden ist. Hierzu gehören filmbildende Harze, die durch Mischpolymerisation von Monomeren erhalten werden, wobei wenigstens eine Komponente eine Vinylidengruppe enthält. Im allgemeinen können filmbildende Vinylidenharze verwendet werden, die im polymerisierten Molekül wenigstens 5 Gew.-%, vorzugsweise aber mindestens 80 Gew.-% Vinylidenchlorid enthalten. Als Comonomere seien genannt:

Vinylchlorid, Vinylbromid, Vinylacetat,
Vinylpropionat, Vinylchloracetat,
Alkylacrylat oder Methacrylat, wie
beispielsweise Methyl-, Äthyl-, Propyl-,
Butyl-, Isobutyl-, Methoxyäthyl- oder
Chloräthylacrylat oder -methacrylat,
Methylvinylketon, Methylisopropenylketon,
Acrylnitril, Methacrylnitril, Styrol,
Vinylnaphthalin, Äthylvinyläther,
Butylvinyläther, N-Vinylphthalimid,
N-Vinylsuccinimid, N-Vinylcarbazol,
Methylen-diäthylmalonat,

ungesättigte organische Säuren, wie Itaconsäure oder Mischungen von diesen Verbindungen. Das Copolymerisat kann neben Vinylidenchlorid eines bis drei dieser Monomere enthalten.

Das Vinylidenharz kann übliche Wachse, z. B. auf Basis von veresterten Montansäuren, Polyolefinwachse oder auf Basis von Oxazolin, und/oder übliche Füllstoffe, beispielsweise Kaolin, insbesondere hydrophobiertes Kaolin, Kieselsäure oder Calciumcarbonat (Kreide) mit einer bevorzugten mittleren Korngröße von 1 bis 3 µm enthalten.

Das Vinylidenharz oder eine Mischung des Vinylidenharzes wird mit oder ohne anderen Harzen und mit oder ohne Weichmacher, wie z. B. Ester der Phthalsäure wie Dibutylphthalat, Ester der Zitronensäure, wie Acetyltributylcitrat, der Sebacinsäure oder Weinsäure, wie Diisobutyltartrat, verwendet.

Das Vinylidenharz wird mit einem hierzu üblichen Verankerungsmittel, z. B. mit einem der obengenannten gehärteten, kationischen hitzehärtbaren Harze als Verankerungsmittel, oder direkt auf die Trägerbahn in Form wäßriger oder nichtwäßriger Mischungen wie Dispersionen, Emulsionen, in Form einer Latex, in Form von Lösungen in Wasser oder organischen Lösungsmitteln oder in Form von Schmelzen aufgebracht. Die Trägerbahn aus regenerierter Cellulose kann sich hierbei in getrocknetem, wieder angefeuchtetem oder noch nicht getrocknetem gelartigem Zustand befinden. Nach dem Auftragen wird das Dispergier- bzw. Lösungsmittel entfernt, z. B. durch Erhitzung mit Heißluft und/oder Infrarotheizung. Die Bahn wird gewöhnlich bis zu einem Feuchtigkeitsgehalt von weniger als 15 Gew.-%, vorzugsweise 5 bis 10 Gew.-%, getrocknet. Eine weitere Sinterung des Überzugs bei erhöhter Temperatur ist nur erforderlich, wenn eine besonders starke Haftung des Überzugs auf dem Träger gewünscht wird. Im allgemeinen ist eine Überzugsdicke im Bereich von etwa 0,05 bis 0,5 mm ausreichend.

Mit Vinylidenharzen als Verankerungsschicht ausgerüstete Schlauchhüllen sind weitgehend gasundurchlässig und eignen sich z. B. für Würste vom Leberwursttyp.

Zur Verpackung von Fleischwaren in Form von Wurstmasse werden bekanntlich geraffte, nahtlose Schlauchhüllen verwendet, die beim Einpressen der Wurstmasse fortlaufend entfältelt werden. Diese gerafften Hüllen, in der Fachsprache auch als Raupen oder Hohlstäbe bezeichnet, werden bisher aus langen, nahtlosen Schläuchen hergestellt, die man in Richtung ihrer Längsachse fördert und gegen eine Gegenkraft rafft, wobei die Länge der gerafften Hülle gewöhnlich nur noch 1 bis 3% der Ursprungslänge beträgt.

Während gekrümmte Wursthüllen nicht oder nur schwer gerafft werden können, bietet die erfindungsgemäße Schlauchhülle diese Möglichkeit.

Dies ist besonders überraschend, da wegen der Verdickung im Bereich der Verklebung infolge der Überlappung der Ränder oder des beide Ränder überdeckenden Bandes Schwierigkeiten beim Raffen zu erwarten waren. Die in den Beispielen hergestellten Schlauchhüllen werden beispielsweise mit dem aus den US-A-3 988 804 und US-A-4 185 358 bekannten Verfahren bzw. der dort beschriebenen Vorrichtung gerafft.

Gemäß diesem Verfahren wird die zum Raffen dienende Kraft von zumindest einem um die Längsachse der Schlauchhülle rotierenden Element aufgebracht. Insbesondere befindet sich das zum Raffen dienende Element während des Raffvorgangs ständig im Krafteingriff mit der Schlauchhülle und überträgt die zur Ausbildung einer biegesteifen Raupe ausreichende Preßkraft auf die Schlauchhülle. Vorteilhafterweise wird der zu raffenden Hülle vor dem eigentlichen Raffvorgang eine Vertiefung in Form einer exakten, durchgehenden Schraubenlinie eingeprägt. Zweckmäßigerweise wird auf die zu raffende Schlauchhülle vor dem Raffvorgang außen ein Gleitmittel und/oder Befeuchtungsmittel aufgebracht. Eine geeignete Vorrichtung für dieses Verfahren besteht aus einem Rafforgan und einem Widerlager, wobei das Rafforgan aus einem die Schlauchhülle umschließenden und in Rotation um diese versetzbaren Ringteil besteht, an dem das zum Raffen dienende und mit der Schlauchhülle im Eingriff stehende Element befestigt ist.

Das zum Raffen dienende Element ist vorzugsweise als ein im zylindrischen Inneren des Ringteils schraubenförmig gewundener Vorsprung ausgebildet. Insbesondere weist das Ringteil eine schraubenförmig gewundene Innennut auf, in die ein entsprechend gewundenes Element eingeführt ist, das von der zylindrischen Innenseite der Hülse als Schraubenwindung absteht. Dieses gewundene Element besteht zweckmäßigerweise aus einem Material mit günstigen Gleiteigenschaften und ist mehrgängig ausgebildet. Das Ringteil und der schraubenförmig gewundene Vorsprung sind gewöhnlich einstückig ausgebildet. Wegen Einzelheiten dieser Vorrichtung wird auf die beiden US-PS verwiesen. In Abweichung von dem dort beschriebenen Verfahren ist es aber bei der Schlauchhülle der Erfindung von Vorteil, eine Sicherung der Hülle gegen Verdrehen um ihre Achse nicht vorzusehen bzw. ein kontinuierliches Verdrehen der Hülle um ihre Achse zu steuern. Das geschieht beispielsweise dadurch, daß man einen Raffdorn einsetzt, der gegenüber dem üblichen verkleinert ist, so daß die durch den Klebestreifen bzw. durch die Überlappung relativ dicke Nahtzone spiralig um die Längsachse der gerafften Schlauchhülle angeordnet wird, wobei man ein Raffverhältnis von 1 : 70 bis 1 : 80 erreichen kann.

Diese vorteilhafte spiralförmige Verdrehung der Hülle und folglich eine Verdrillung der relativ dicken Nahtzone um die Längsachse der Hülle beim Raffvorgang erfolgt auch problemlos mit anderen an sich bekannten Raffvorrichtungen, wie sie z. B. in den US-A-2 819 488, US-A-3 619 854, US-A-3 594 857 und US-A-3 766 603 beschrieben sind. Die Anzahl der Windungen pro 10 m Schlauchlänge liegt zweckmäßigerweise zwischen 0,5 und 10 und wird je nach Ausmaß der Verdickung in der Nahtzone und der Breite des wärmeschrumpffähigen Folienstreifens gewählt.

Die gerafften Schläuche werden mit einem Wurstbrät vom Brühwursttyp gefüllt (ca. 20 m/min), mechanisch abgedreht, bei etwa 70 bis 80° C gebrüht, und/oder bei etwa 65 bis 75° C geräuchert und mit Wasser abgekühlt.

Beim Erwärmen der gefüllten Wursthülle wird das Schrumpfvermögen des Folienstreifens ausgelöst, und die Wursthülle nimmt eine gekrümmte Form an. Der Krümmungsradius hängt dabei in erster Linie von dem Ausmaß der Verkürzung des Folienstreifens beim Schrumpfen ab. Daneben sind auch die Einwirkungszeit der Wärme und das Material des Folienstreifens von Bedeutung.

Nach dem Abkühlen erhält man gekrümmte oder ringförmige Würste mit gleichmäßigem Kaliber und schälbarer, an der Wurstmasse eng anliegender Hülle. Nach dem Abschälen der Wursthülle halten die Würste ihre gekrümmte Form bei.

Sofern die Schlauchhülle mit besonders empfindlichen Nahrungsmitteln gefüllt ist, die üblicherweise einer Sterilisierung bedürfen, so kann man übliche Methoden, wie z. B. Hitzebehandlung oder Hochfrequenzbestrahlung, anwenden und gegebenenfalls dabei den Schrumpf auslösen.

Die Schlauchhüllen der Erfindung lassen sich mit höherer Geschwindigkeit als bisher produzieren: Bei der Herstellung von Bahnen aus regenerierter Cellulose nach dem Viskoseverfahren kann der Spinnprozeß rascher durchgeführt werden, ebenso das Beschichten der Bahnen mit dem wasserunlöslichen Harz und das Bedrucken. Neben Flexodruck ist auch hochwertiger Tiefdruck möglich. Ferner läßt sich der Zuschnitt bzw. die Bahn mit einem Rundumdruck oder als Vorder- und Rückseitendruck bedrucken. Bei der Verwendung als Wursthülle tritt keine Geschmacksbeeinflussung der Wurstmasse ein. Die Wursthülle zeigt große Festigkeit gegenüber Dehnungsbelastung und Volumenbeständigkeit beim Füllen mit Wurstmasse, Hantieren und Verarbeiten. Sie ist auch bei tiefen Temperaturen lagerfähig und läßt sich gut aufschneiden.

Die Schlauchhülle läßt sich ferner zur Herstellung gekrümmter Würste verwenden, wobei sie in geraffter Form in üblichen kontinuierlich arbeitenden Wurstabfüllmaschinen eingesetzt werden kann und erst in den Verfahrensschritten zur Haltbarmachung der Wurst die Kranzform annimmt.

Beispiel 1

Eine Bahn aus regenerierter Cellulose, hergestellt nach dem Viskoseverfahren, mit einer Dikke von 41 µm, einem Flächengewicht von 60 g/m², einem Wassergehalt von 7% und einem Weichmachergehalt (Glycerin) von 19 Gew.-% wird auf einer üblichen Beschichtungsanlage mit Walzenantragswerken und Trocknungsstationen auf einer Oberfläche mit einer 1%igen wäßrigen Lösung eines hitzehärtbaren Harzes (®Resamin VHW 61/1 der Fa. Cassella) beschichtet. Das Harz ist ein Reaktionsprodukt von aliphatischem 2,6-Polyamid, Äthylentriamin und Epichlorhydrin. Nach Trocknung der Bahn bei etwa 125° C im Luftstrom verbleibt eine Harzschicht mit einem Flächengewicht von 50 mg/m².

Die beschichtete Bahn wird in 63 mm breite Bänder geschnitten und unter Verwendung von Formschablonen zu einem Schlauch gebogen,

der durch ein den Schlauch umgebendes Rohr abgestützt wird. Die längsaxial sich erstreckenden Ränder der Bahn berühren sich mit ihren Kanten. Die mit Harz beschichtete Oberfläche befindet sich auf der Außenseite des Schlauches. Zur Herstellung eines auf seiner Oberfläche einen Haftkleber aufweisenden wärmeschrumpffähigen Folienstreifens wird eine 25 µm dicke biaxial streckorientierte Polyäthylenterephthalatfolie mit einem Schrumpf von 20% in Längsrichtung und 18% in Querrichtung, gemessen in Wasser von 80°C nach 10 Minuten Einwirkungszeit, mit einer von einem siliconisierten Trennpapier trocken übertragbaren 50 µm dikken Haftklebstoffschicht auf Basis von Polyacrylat (®Scotchtape Y 2537 der Fa. 3M), vollflächig versehen und ein 15 mm breiter Folienstreifen parallel zur Längsrichtung abgeschnitten. Der Folienstreifen wird mit der Haftklebstoffschicht auf die durch den Kantenstoß gebildete Naht aufgelegt, wobei die beiden Randzonen symmetrisch überdeckt werden. Durch Andrücken, z. B. mit einer Walze, werden die aneinanderstoßenden Ränder mit dem Folienstreifen unter Ausbildung einer wasserdichten Naht verbunden. Es werden drei Varianten hergestellt: ein Folienstreifen außen oder innen und jeweils ein Folienstreifen innen und außen.

Die Schläuche werden in geraffter Form auf das Füllrohr einer üblichen Füllapparatur geschoben, mit Wurstbrät einer Brühwurst-Rezeptur gestopft und durch Abdrehen, Abbinden oder Klippen zu Würstchen vom Kaliber 20 mm in Längen von ca. 18 cm portioniert.

Nach ca. 15minütigem Abtrocknen bei 50 bis 60°C werden die Würstchen während 10 min in 75 bis 80°C heißem Wasser gebrüht. Beim Brühen nehmen alle Würstchen eine gleichmäßig gekrümmte Form an, die auch nach dem Abschälen der Hüllen erhalten bleibt.

Beispiel 2

Nach dem in Beispiel 1 beschriebenen Verfahren werden vier Schlauchhüllen mit innenliegendem Klebeband hergestellt, wobei die Breite der Folienstreifen variiert wird.

Es werden nach dem Brühen gekrümmte Würstchen erhalten, die in Abhängigkeit von der Breite des Folienstreifens unterschiedliche Krümmungen aufweisen:

| | | | | | |
|---|---|---|---|---|---|
| Klebebandbreite | mm | 6 | 8 | 12 | 18 |
| Krümmungsradius | mm | 250 | 230 | 200 | 150 |

Beispiel 3

Eine Bahn aus regenerierter Cellulose wird nach dem Viskoseverfahren hergestellt, wobei das hitzehärtbare Harz direkt auf die noch nicht getrocknete Bahn aus Cellulosehydrat-Gel aufgetragen wird. Hierzu läuft die Bahn aus Cellulosehydrat-Gel mit 60 m/min Geschwindigkeit durch eine Wanne, die mit einer 0,15 gew.-%igen wäßrigen Lösung des in Beispiel 1 verwendeten hitzehärtbaren Harzes gefüllt ist, und danach durch ein Bad von ca. 6 gew.-%iger wäßriger Glycerinlösung. Die nach dem Trocknen erhaltene Bahn aus regenerierter Cellulose hat ein Flächengewicht von 58 g/m², einen Wassergehalt von 8%, einen Glyceringehalt von 10% und enthält ca. 45 mg/m² des beim Trocknen gehärteten Harzes. Die Bahn wird in 63 mm breite Bänder geschnitten.

Zur Herstellung des schrumpffähigen Folienstreifens wird eine quergereckte, weichmacherfreie Folie aus Polyvinylchlorid mit einer Dicke von 40 µm benutzt, die die folgenden Schrumpfwerte aufweist:

| Prüfungsbedingungen | Schrumpfwerte, % längs | quer |
|---|---|---|
| 10 min in Wasser von 80°C | 13 | 74 |
| 15 min in Luft von 100°C | 5 | 45 |

Diese Folie wird unter Verwendung eines Rakelstabs mit einer hochprozentigen, wäßrigen, weichmacherfreien, anionenaktiven Dispersion eines Haftklebstoffs auf Basis eines carboxylgruppenhaltigen Acrylsäureestercopolymerisats mit einem Feststoffgehalt (DIN 53 189) von etwa 70%, einer Viskosität bei 25°C (Contraves-Rheometer STV, C III) von 800 bis 2500 mPa · s und einem pH-Wert (DIN 53 785) von 3,5 bis 4,5 (®Acronal DS 3163 der Fa. BASF) derart beschichtet, daß nach dem Trocknen eine Schichtdicke von ca. 40 µm verbleibt.

In einer Abwandlung dieses Verfahrens enthält die Haftklebstoff-Dispersion einen Haftklebstoff auf Basis eines carboxylgruppenhaltigen Acrylsäureestercopolymerisats unter Mitverwendung von Acrylnitril (®Acronal 85 D der Fa. BASF). Die wäßrige Dispersion des Haftklebstoffs zeigt eine Viskosität bei 25°C von 70 bis 150 mPa · s (Contraves-Rheometer STV, B III) und einen pH-Wert (DIN 53 785) von 2 bis 3.

In einer weiteren Variante ist der Haftklebstoff eine wäßrige, weichmacherfreie, anionenaktive Dispersion eines Polymeren auf Basis eines Acrylsäurebutylesters (®Acronal 4 D der Fa. BASF). Der Feststoffgehalt (DIN 53 189) ist etwa 50%, die Viskosität der Dispersion bei 25°C (Epprecht-Viskosimeter, STV, A III) ist etwa 15 bis 18 mPa · s.

Man schneidet quer zur Längsrichtung der mit Haftklebstoff beschichteten Bahn parallele Folienstreifen, die als Klebebänder für die Innenverklebung der auf Stoß sich berührenden Bahnkanten aus regenerierter Cellulose dienen. Der Folienstreifen hat somit hohen Schrumpfwert in seiner Längsrichtung.

Nach Füllen mit Wurstbrät und Brühen gemäß Beispiel 1 erhält man gekrümmte Würstchen, die

in Abhängigkeit von der Breite des Folienstreifens die folgenden Krümmungen zeigen:

| | | | | | |
|---|---|---|---|---|---|
| Klebebandbreite | mm | 6 | 8 | 12 | 18 |
| Krümmungsradius | mm | 220 | 190 | 150 | 90 |

Beispiel 4

Man wiederholt Beispiel 3, verwendet aber einen Folienstreifen, dessen Trägermaterial eine biaxial streckorientierte Folie aus Polyäthylenterephthalat mit einer Dicke von 19 µm, die einen Wärmeschrumpf von 20 bis 25% in Längsrichtung und 4 bis 6% in Querrichtung zeigt, gemessen nach 15minütiger Lagerung in Wasser von 80° C.

Zur Beschichtung dieser Folie dient eine wäßrige Haftklebstoffdispersion, die nach Trocknung eine Kleberdicke von ca. 40 µm liefert. Die Haftklebstoffdispersion ist eine wäßrige, feinteilige, weichmacherfreie, anionenaktive Dispersion eines bei Zugabe von Alkali kalt vernetzbaren, carboxylgruppenhaltigen Copolymeren auf der Basis von Acrylsäureestern unter Mitverwendung von Acrylnitril, Feststoffgehalt (DIN 53 189) etwa 50%, Viskosität bei 25° C (Contraves Rheometer, STV, B III) 100—200 mPa · s, pH-Wert 4,5 bis 5,5 (®Acronal 80 D der Fa. BASF). Der genannte Haftklebstoff wird nach dem Auftrag auf die Bahn mit wäßriger Alkalilösung nachvernetzt. In einer Abwandlung wird als Haftklebstoff eine vorvernetzte, unter Wärmeeinwirkung schnell vernetzende, etwa 30%ige weichmacherfreie Lösung eines carboxylgruppenhaltigen Acrylatestercopolymerisats in Benzin mit einem Siedebereich von etwa 65 bis 95° C (®Acronal DS 3110 der Fa. BASF) verwendet. Die Viskosität der Lösung bei 25° C ist 0,8 bis 2,5 mPa · s (Epprecht-Viskosimeter, STV, C III).

Die 12 mm breiten, parallel zur Längsrichtung geschnittenen, mit Haftklebstoff versehenen Folienstreifen werden wie in Beispiel 3 zur Herstellung innenverklebter Schlauchhüllen verwendet, diese mit Wurstbrät gefüllt und in der dort beschriebenen Weise aufgearbeitet.

Man erhält gekrümmte Würstchen mit Krümmungsradien im Bereich von etwa 200 bis 220 mm.

Beispiel 5

Eine Bahn aus regenerierter Cellulose wird nach dem Viskoseverfahren hergestellt, wobei das hitzehärtbare Harz direkt auf die noch nicht getrocknete Bahn aus Cellulosehydrat-Gel aufgetragen wird. Hierzu läuft die Bahn aus Cellulosehydrat-Gel mit 60 m/min Geschwindigkeit durch eine Wanne, die mit einer 0,15 gew.-%igen wäßrigen Lösung des in Beispiel 1 verwendeten hitzehärtbaren Harzes gefüllt ist, und danach durch ein Bad von ca. 6 gew.-%iger wäßriger Glycerinlösung. Die nach dem Trocknen erhaltene Bahn aus regenerierter Cellulose hat ein Flächengewicht von 58 g/m², einen Wassergehalt von 8%, einen Glyceringehalt von 10% und enthält ca. 45 mg/m² des beim Trocknen gehärteten Harzes. Die Bahn wird in 63 mm breite Bänder geschnitten.

Ein solches Band wird derart zu einem Schlauch geformt, daß sich die längsaxialen Bahnkanten berühren. Zum Verbinden des Kantenstoßes wird ein perforierter Klebestreifen benutzt, der wie folgt angefertigt wird:

Man beschichtet eine Bahn aus biaxial gereckter, wärmeschrumpffähiger Folie aus Polyäthylenterephthalat einer Dicke von 19 µm und einem Wärmeschrumpf von ca. 25% (gemessen in 80° C heißem Wasser nach 15 min) in Längsrichtung mit einer wäßrigen Haftkleberdispersion (®Acronal DS 3163, Feststoffgehalt 70%, vgl. Beispiel 3), vertreibt das Wasser im Luftstrom von ca. 40° C und legt auf die ca. 40 µm dicke Kleberschicht ein adhäsiv wirkendes Silikonpapier (Flächengewicht 70 g/m²) mit Hilfe eines Walzenpaares auf. Dieser Verbund wird mittels Nadelwalzen kontinuierlich mit durchgehenden feinen Löchern versehen (Durchmesser ca. 0,2 mm, Anzahl 15/cm) und in Streifen beliebiger Breite geschnitten.

Ein 12 mm breiter Streifen wird kontinuierlich vom Silikonpapier befreit und gleichzeitig mit der Kleberseite symmetrisch auf den Kantenstoß gedrückt. Dieser mit außenliegender Stoßnaht verklebte Schlauch wird gerafft, auf einer Füllapparatur mit Wurstbrät Wiener Rezeptur gefüllt und durch Abdrehen oder dergleichen zu Würstchen vom Kaliber 20 mm in Längen von ca. 180 mm portioniert.

Nach 15 Minuten Abtrocknen bei 50 bis 60° C werden die Würstchen mit Feuchtrauch während 10 Minuten bei 70 bis 80° C geräuchert und anschließend für weitere 10 Minuten in 75 bis 80° C heißem Wasser gebrüht. Beim Räuchern und Brühen nehmen die Würstchen eine gekrümmte Form an, die auch nach dem Abschälen der Hüllen erhalten bleibt.

Beispiel 6

In Abänderung zu Beispiel 5 wird die dort genannte Haftkleberdispersion in Form von zwei parallelen Streifen von jeweils 6 mm Breite mittels Siebdruck unter Verwendung einer 40-mesh-Lochschablone und einem Streichrakel dicht neben die beiden Ränder der längsaxialen Randzonen des 63 mm breiten Bahnmaterials aus regenerierter Cellulose aufgedruckt, wobei der Klebstoff nach Vertreiben des Wassers in Form von im Querschnitt kreisförmigen Flächen mit einem Durchmesser von ca. 0,45 mm und einer Höhe von 20 bis 30 µm vorliegt.

Man formt die Bahn derart zu einem Schlauch, daß die Kanten sich mit ihrer Schnittfläche berühren und der streifenförmige Klebstoffauftrag auf der Innenseite des Schlauchs liegt. Gleichzeitig wird ein 12 mm breiter und 19 µm dicker, wärmeschrumpffähiger Folienstreifen aus Polyäthylenterephthalat, der in einem separaten Schritt durch Nadeln gemäß Beispiel 5 perforiert wurde, in den inneren Hohlraum des sich bildenden Schlauches eingeführt und in Kontakt mit den beiden Klebstoffschichten gebracht.

Der geklebte Schlauch wird in üblicher Weise mit Wurstbrät gefüllt, portioniert, geräuchert und gebrüht. Die entstehenden Würstchen vom Kaliber 20 mm sind gleichmäßig mit Räucherfärbung versehen und weisen eine gekrümmte Form auf, die auch nach Abschälen der Hülle erhalten bleibt.

Wenn die in den Beispielen erhaltenen Schläuche mit Wasser gefüllt werden, bleiben sie nach mehrtägiger Lagerung an der Luft bei Raumtemperatur und nach mehrstündigem Hängen in heißem Wasser von 80°C im Bereich der Klebenaht völlig dicht. Sie überstehen ferner einen Innendruck von 1 bar, der z. B. mit Druckluft erzeugt wird.

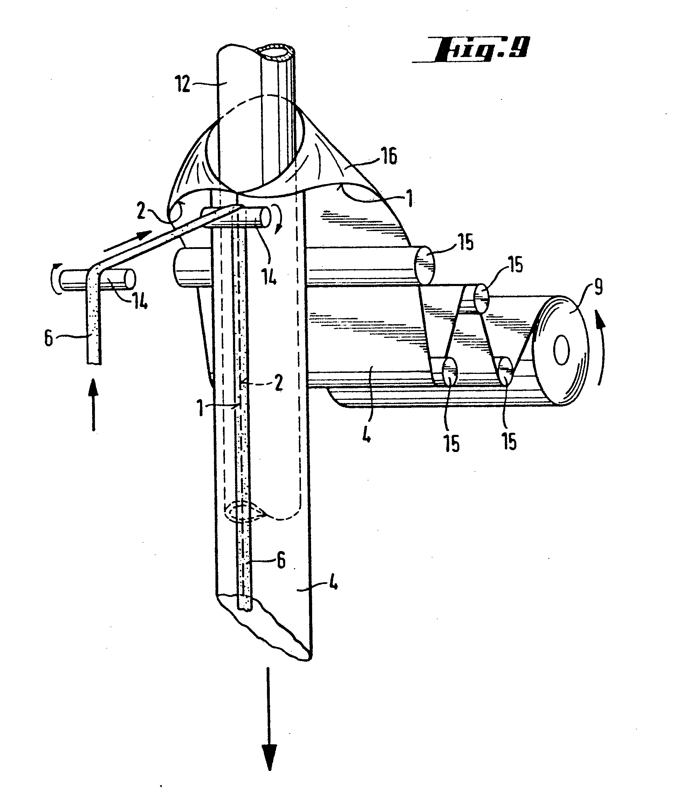

Die Fig. 1, 2 und 3 zeigen Ausführungsformen der Verklebungsbereiche der Schlauchhülle queraxial im Schnitt, die Fig. 4 und 5 zeigen rauchdurchlässige Ausführungsformen der Schlauchhülle, wobei auch hier nur der Überlappungsbereich gezeigt wird, die Fig. 6 und 7 zeigen Würste mit der Schlauchhülle der Erfindung vor und nach dem Brühen bzw. Räuchern. In den Fig. 8, 8a und 9 sind zwei Verfahren zur Herstellung der Schlauchhülle dargestellt.

In Fig. 1 sind die zu den längsaxial sich erstreckenden Rändern 1 und 2 nahe Bereiche des Zuschnitts bzw. der Bahn 4 überlappend miteinander verklebt, wobei die Haftklebstoff enthaltenden Schichten 3 und der wärmeschrumpffähige Folienstreifen 6 sich zwischen den überlappenden Bereichen befindet. Mit 5a und 5b sind die haftvermittelnden Harzschichten auf den Oberflächen des Zuschnitts bzw. der Bahn bezeichnet.

In Fig. 2 und 3 stoßen die Ränder 1 und 2 des Zuschnitts bzw. der Bahn 4 aneinander und sind mit einem beide Ränder überdeckenden wärmeschrumpffähigen Filmstreifen 6 über eine Haftklebstoff enthaltende Schicht 3 und eine haftvermittelnde Harzschicht 5 verbunden. Der Filmstreifen 6 kann sich somit auf der Innen- oder Außenseite oder auf der Außen- und Innenseite der Schlauchhülle befinden.

In Fig. 4 ist der Verklebungsbereich einer analog zu Fig. 2 verklebten Schlauchhülle dargestellt, wobei auch die Bezugsziffern die gleiche Bedeutung haben. Mit 7 sind Durchlässe in der Klebstoffschicht 3 bezeichnet, die sich zwischen dem punktförmig strukturierten Klebstoffauftrag befinden.

Die Fig. 5 zeigt eine weitere Ausbildung des in Fig. 4 dargestellten Verklebungsbereiches. Mit 8 sind Perforationen im Bereich der Ränder 1 und 2 und des Folienstreifens 6 bezeichnet, die sich durch die ganze Naht einschließlich der Bahn 4, der haftvermittelnden Harzschicht 5, der Klebstoffschicht 3 und dem Folienstreifen 6 erstrekken.

Auch sind die Dimensionen der in den Figuren gezeigten Schichten aus Gründen der besseren Übersichtlichkeit nicht maßstabsgetreu wiedergegeben.

Die Fig. 6 und 7 zeigen mit Wurstmasse gefüllte Schlauchhüllen vor und nach der Wärmeschrumpfung des Folienstreifens 6.

Aus der Fig. 8 ist der Verfahrensablauf der Schlauchformung und Verklebung der Randbereiche zu dem in der Fig. 2 gezeigten Verklebungsbereich ersichtlich. Die von einer Wickelrolle 9 abgezogene Bahn 4 durchläuft eine Formschablone 10, im Schnitt in Fig. 8a gezeigt, und eine Überlappungshilfe 11, in der die Kanten der Bahn 4 aneinanderstoßend einander genähert werden. Vor der Überlappungshilfe 11 wird ein Folienstreifen 6a mit seiner Klebstoffschicht auf die Innenseite der jetzt schlauchförmigen Bahn 4 geklebt, nach der Überlappungshilfe 11 wird ein weiterer Folienstreifen 6b auf die Außenseite der schlauchförmigen Bahn 4 aufgeklebt. Danach durchläuft die Bahn 4 das schematisch dargestellte Stützrohr 12 mit Anlegehülse 13.

In Fig. 9 erfolgt die Schlauchbildung mit einer Formschulter. Die Bahn 4 wird analog zu dem in Fig. 8 gezeigten Verfahren mit einem wärmeschrumpffähigen Folienstreifen 6 im Randbereich verklebt, wobei dieser über Walzen 14 geführt wird. Die Bahn 4 läuft über Walzen 15 zu einer Formschulter 16, wo sie zu einem Schlauch geformt wird.

**Patentansprüche**

1. Aus blatt- oder bahnförmigem, rechteckigem Folienzuschnitt oder endloser Folienbahn (4) auf Basis von natürlichen Polymeren, der bzw. die um die Längsachse gebogen ist und dessen bzw. deren längsaxial sich erstreckenden Randbereiche mit einer Klebenaht verbunden sind, bestehende Schlauchhülle für Lebensmittel, insbesondere Wurstwaren, wobei die Schlauchhülle zumindest im Bereich der Klebenaht eine Schicht (5) aufweist, die ein im wesentlichen wasserunlösliches haftvermittelndes Harz enthält, dadurch gekennzeichnet, daß die längsaxial sich erstreckenden Ränder (1, 2) aneinanderstoßen oder überlappen und mit die randnahen Bereiche überdeckenden Filmstreifen (6) aus überwiegend und zumindest in längsaxialer Richtung zur Schlauchhülle bei Temperaturen zwischen 60 und 100°C um 5 bis 80% wärmeschrumpffähigem Material auf der Außenseite und/oder Innenseite der Schlauchhülle verbunden sind, wobei eine Haftklebstoff enthaltende Schicht (3) sich zwischen dem (den) Filmstreifen (6) und den zu den längsaxial sich erstreckenden Rändern (1, 2) nahen Bereichen befindet, und daß die haftvermittelnde Schicht (5) zwischen Haftklebstoff enthaltender Schicht (3) und Folienzuschnitt bzw. Folienbahn (4) angeordnet ist.

2. Schlauchhülle nach Anspruch 1, dadurch gekennzeichnet, daß die randnahen Bereiche in Längsrichtung überlappend miteinander verklebt sind, wobei sich der Filmstreifen aus wärmeschrumpffähigem Material zwischen den sich überlappenden Bereichen befindet.

3. Schlauchhülle nach Anspruch 1, dadurch gekennzeichnet, daß die längsaxial sich erstreckenden Ränder aneinander stoßen und mit längsaxial sich erstreckenden, beide Rändern nahe Bereiche überdeckenden Filmstreifen aus wärmeschrumpffähigem Material auf der Außenseite und/oder Innenseite der Schlauchhülle verbunden sind.

4. Schlauchhülle nach einem der Ansprüche 1 bis 3, dadurch gekennzeichnet, daß die Schlauchhülle aus regenerierter Cellulose besteht.

5. Schlauchhülle nach einem der Ansprüche 1 bis 4, dadurch gekennzeichnet, daß das wasserunlösliche haftvermittelnde Harz ein Vinyliden-Gruppen enthaltendes Polymeres enthält oder ist, das gegebenenfalls mit einem Harz, z. B. einem gehärteten kationischen hitzehärtbaren Harz nach Anspruch 8, verankert ist.

6. Schlauchhülle nach einem der Ansprüche 1 bis 4, dadurch gekennzeichnet, daß der aus wärmeschrumpffähigem Material bestehende Filmstreifen und die Randzonen des Zuschnitts bzw. der Bahn im Überlappungsbereich des Filmstreifens mit diesen Randzonen aus rauchdurchlässigem Material besteht und/oder rauchdurchlässige Struktur, z. B. in Form von Öffnungen, Unterbrechungen, Durchlässen, Ausnehmungen, Poren und Perforationen, aufweisen und daß die Haftklebstoff enthaltende Schicht zwischen Filmstreifen und Randzonen zur Verbesserung der Rauchdurchlässigkeit Unterbrechungen und/oder Durchlässe, z. B. in Form von Poren, Öffnungen, Ausnehmungen oder Perforationen, aufweist, wobei der Filmstreifen und/oder die Haftklebstoff enthaltende flächenhafte Schicht mit verbesserter Rauchdurchlässigkeit gegebenenfalls ein flächenhaftes textiles Gebilde, ein Schwammstoff, ein Schaumstoff, eine mikroporöse Folie oder eine Membran enthält oder ist.

7. Schlauchhülle nach einem der Ansprüche 1 bis 6, dadurch gekennzeichnet, daß das wasserunlösliche haftvermittelnde Harz auf der Bahnoberfläche ein gehärtetes kationisches, hitzehärtbares Harz, insbesondere ein Harnstoff-Formaldehyd-, Melamin-Formaldehyd-, Phenol-Formaldehyd-Harz oder ein Kondensationsprodukt von Polyamidpolyamin, aliphatisches Polyamin oder Polyamid mit bifunktionellen Halohydrinen oder deren Derivaten, wie Epichlorhydrin, enthält oder ist.

8. Schlauchhülle nach einem der Ansprüche 1 bis 7, dadurch gekennzeichnet, daß der Haftklebstoff als Basisharz einen Polyacrylsäureester oder Polymethacrylsäureester, vorzugsweise thermisch und/oder chemisch vernetzbare Harze, insbesondere ein Copolymerisat mit reaktiven Comonomeren, insbesondere ein Harz auf Basis eines carboxylgruppenhaltigen Acrylsäureestercopolymerisats enthält.

9. Schlauchhülle nach Anspruch 8, dadurch gekennzeichnet, daß der Haftklebstoff ein Harz auf Basis eines Homo- oder Copolymerisats mit Acrylsäureester- und Acrylnitril-Comonomeren, insbesondere ein Homo- oder Copolymerisat von Acrylsäurebutylester und/oder Acrylsäure-2-äthylhexylester enthält.

10. Schlauchhülle nach einem der Ansprüche 1 bis 9, dadurch gekennzeichnet, daß sie gerafft ist, wobei der Verklebungsbereich spiralförmig um die Längsachse der gerafften Schlauchhülle zumindest in Teilbereichen der Schlauchhülle angeordnet ist.

11. Schlauchhülle nach einem der Ansprüche 1 bis 10, dadurch gekennzeichnet, daß der Folienstreifen im Temperaturbereich von 60 bis 100°C zwischen 5 und 80% in Längsrichtung schrumpft.

12. Verfahren zur Herstellung der Schlauchhülle nach einem der Ansprüche 1 bis 11, wobei man einen blatt- oder bahnförmigen Zuschnitt oder eine endlose Bahn um die Längsachse biegt und zu einem Schlauch formt und die beiden längsaxial sich erstreckenden Randbereiche überlappend mit einem dazwischen angeordneten Filmstreifen oder auf Stoß angeordnet mit beide Randbereiche überlappenden Filmstreifen verklebt, wobei zumindest im Verklebungsbereich eine haftvermittelnde Schicht auf die Randbereiche aufgetragen worden ist, dadurch gekennzeichnet, daß man vor, während oder nach der Schlauchformung auf die zu verklebenden Flächen des Zuschnitts bzw. der Bahn und/oder des Filmstreifens eine Haftklebstoff enthaltende Lösung oder Dispersion aufbringt, gegebenenfalls das Lösungs- bzw. Dispergiermittel entfernt und die Verklebungsnaht bildet, wobei der Filmstreifen aus überwiegend und zumindest in längsaxialer Richtung, bei Temperaturen zwischen 60 und 100°C um 5 bis 80% wärmeschrumpffähigem Material besteht und gegebenenfalls aufgrund seiner Struktur und/oder chemischen Zusammensetzung im wesentlichen rauchdurchlässig ist.

13. Verfahren nach Anspruch 12, dadurch gekennzeichnet, daß man zur Verbesserung der Rauchdurchlässigkeit vor oder nach dem Bilden der Verklebungsnaht die Haftklebstoff enthaltende Schicht, die sich auf der längsaxial sich erstreckenden Randzone des Zuschnitts oder der Bahn oder auf dem einseitig oder doppelseitig klebenden Folienstreifen befindet, gegebenenfalls auch eine oder beide Randzonen und/oder den Folienstreifen, mit Durchlässen in Form von Öffnungen, Poren und/oder Perforationen versieht.

14. Verfahren nach einem der Ansprüche 12 oder 13, dadurch gekennzeichnet, daß die Durchlässe während und/oder nach dem Aufbringen der Haftklebstoff enthaltenden Schicht auf die Randzone(n) des Zuschnitts oder der Bahn oder auf das einseitig oder doppelseitig klebende Band erzeugt werden.

15. Verfahren nach einem der Ansprüche 12 bis 14, dadurch gekennzeichnet, daß man zur Verbesserung der Rauchdurchlässigkeit die Haftklebstoff enthaltende Lösung oder Dispersion mit Unterbrechungen und/oder Ausnehmungen, z. B. in Streifen-, Punkt- oder Rautenform, auf die zu verklebenden Flächen des Zuschnitts oder der Bahn und/oder Fläche des die beiden Randbereiche überlappenden Folienstreifens oder Flächen des zwischen den überlappenden Randbereichen angeordneten Folienstreifens, z. B. im Siebdruck- oder Tiefdruckverfahren, aufbringt.

16. Verfahren nach einem der Ansprüche 12 bis 15, dadurch gekennzeichnet, daß man die Haftklebstoff enthaltende Lösung oder Dispersion mit einem Schutzband auf die Randzone(n) und/oder auf den Filmstreifen aufbringt, das Schutzband vor oder während der Schlauchformung abzieht und die auf Stoß angeordneten Randbereiche der zu einem Schlauch geformten Bahn mit dem Filmstreifen verklebt.

17. Verwendung der Schlauchhülle nach einem der Ansprüche 1 bis 11 zur Herstellung gekrümmter oder ringförmiger Würste, wobei man die Schlauchhülle in an sich üblicher Weise mit Wurstbrät füllt, anschließend bei einer Temperatur brüht und/oder räuchert, bei welcher der Wärmeschrumpf des Folienstreifens in Längsrichtung ausgelöst wird, und gegebenenfalls die Wursthülle von der Wurst abschält.

**Claims**

1. A tubular casing for foodstuffs, in particular sausages, which comprises a sheet-like or web-like, rectangular cut piece of film or endless web of film (4) based on naturally occurring polymers which is curved around the lengthwise axis and the edge regions of which running along the lengthwise axis are bonded with a glued seam, the tubular casing having, at least in the region of the glued seam, a layer (5) which contains an essentially water-insoluble adhesion-promoting resin, wherein the edges (1, 2) running along the lengthwise axis meet or overlap and are bonded, on the outside and/or inside of the tubular casing, with strips of film (6) which cover the regions close to the edges and consist of a material which is capable of shrinking by 5 to 80% predominantly and at least in the direction of the lengthwise axis of the tubular casing, under the action of heat at temperatures between 60 and 100°C, there being a layer (3) containing pressure-sensitive adhesive between the strip(s) of film (6) and the regions close to the edges (1, 2) running along the lengthwise axis, and wherein the adhesion-promoting layer (5) is located between the layer (3) containing pressure-sensitive adhesive and the cut piece of film or web of film (4).

2. A tubular casing as claimed in claim 1, wherein the regions close to the edges are glued together in overlapping fashion in the lengthwise direction, the strip of film of material which is capable of shrinking under the action of heat being between the overlapping regions.

3. A tubular casing as claimed in claim 1, wherein the edges running along the lengthwise axis meet and are bonded, on the outside and/or inside of the tubular casing, by strips of film which are made of material which is capable of shrinking under the action of heat and which run along the lengthwise axis and cover the regions close to the two edges.

4. A tubular casing as claimed in any of claims 1 to 3, wherein the tubular casing consists of regenerated cellulose.

5. A tubular casing as claimed in any of claims 1 to 4, wherein the water-insoluble adhesion-promoting resin contains or is a polymer which contains vinylidene groups and is optionally anchored to a resin, for example a hardened cationic thermosetting resin, as claimed in claim 8.

6. A tubular casing as claimed in any of claims 1 to 4, wherein the strips of film consisting of material which is capable of shrinking under the action of heat and the edge zones of the cut piece or web consist, in the overlapping region of the strip of film and these edge zones, of material which is permeable to smoke and/or have a structure which is permeable to smoke, for example a structure in the form of openings, interruptions, passages, gaps, pores and perforations, and wherein the layer which contains pressure-sensitive adhesive and is between the strip of film and the edge zones has interruptions and/or channels, for example in the form of pores, openings, gaps or perforations, in order to improve the permeability to smoke, the strip of film and/or the sheet-like layer which contains pressure-sensitive adhesive and has an improved permeability to smoke containing or being a sheet-like textile structure, a sponge, a foam, a microporous film or a membrane.

7. A tubular casing as claimed in any of claims 1 to 6, wherein the water-insoluble adhesion-promoting resin on the surface of the web contains or is a hardened cationic thermosetting resin, in particular a urea/formaldehyde, melamine/formaldehyde or phenol/formaldehyde resin or a condensation product of a polyamide-polyamine, aliphatic polyamine or polyamide and bifunctional halohydrins or derivatives thereof, such as epichlorohydrin.

8. A tubular casing as claimed in any of claims 1 to 7, wherein the pressure-sensitive adhesive contains as the base resin, a polyacrylic acid ester or polymethacrylic acid ester, preferably resins which can be cross-linked by means of heat and/or chemically, in particular a copolymer with reactive comonomers, in particular a resin based on an acrylic acid ester copolymer containing carboxyl groups.

9. A tabular casing as claimed in claim 8, wherein the pressure-sensitive adhesive contains a resin based on a homo- or copolymer with acrylic acid ester comonomers and acrylonitrile comonomers, in particular a homo- or copolymer of acrylic acid butyl ester and/or acrylic acid-2-ethylhexyl ester.

10. A tubular casing as claimed in any of claims 1 to 9, wherein the casing is shirred, the gluing region being arranged spirally around the lengthwise axis of the shirred tubular casing, at

least in part areas of the tubular casing.

11. A tubular casing as claimed in any of claims 1 to 10, wherein the strip of film shrinks between 5 and 80% in the lengthwise direction in the temperature range from 60 to 100° C.

12. A process for the manufacture of the tubular casing as claimed in any of claims 1 to 11, wherein a sheet-like or web-like cut piece or continuous web is curved around the lengthwise axis and shaped to form a tube, and the two edge regions running along the lengthwise axis are glued, in overlapping fashion with a strip of film located between them, or by being pushed together with a strip of film overlapping the two edge regions, an adhesion-promoting layer having been applied to the edge regions at least in the gluing region, which comprises applying, before, during or after shaping of the tube, a solution or dispersion containing a pressure-sensitive adhesive to the areas of the piece or web and/or of the strip of film which are to be glued, if appropriate removing the solvent or dispersing agent and forming the glued seam, the strip of film consisting of material which is capable of shrinking by 5 to 80% predominantly and at least in the direction of the lengthwise axis, under the action of heat at temperatures between 60 and 100° C, and optionally being essentially permeable to smoke as a result of its structure and/or chemical composition.

13. A process as claimed in claim 12, wherein, in order to improve the permeability to smoke, the layer which contains pressure-sensitive adhesive and which is on the edge zone of the cut piece or web which run along the lengthwise axis and/or on the strip of film which is tacky on one side or both sides, and if appropriate also one or both of the edge zones and/or the strip of film, is/are provided with passages in the form of openings, pores and/or perforations before or after forming the glued seam.

14. A process as claimed in any of claims 12 or 13, wherein the passages are produced during and/or after application of the layer containing pressure-sensitive adhesive to the edge zone(s) of the cut piece or web or to the tape which is tacky on one side or both sides.

15. A process as claimed in any of claims 12 to 14, wherein, in order to improve the permeability to smoke, the solution or dispersion containing pressure-sensitive adhesive is applied, with interruptions and/or gaps, for example in form of strips, points or lozenges, for example by the screen printing process or gravure printing process, to the areas, which are to be glued, of the cut piece or web and/or of the strip of film overlapping the two edge regions and/or of the strip of film located between the overlapping edge regions.

16. A process as claimed in any of claims 12 to 15, wherein the solution or dispersion containing pressure-sensitive adhesive is applied, with a protective tape, to the edge zone(s) and/or to the strip of film, the protective tape is pulled off before or during shaping of the tube, and the edge regions, which are pushed together, of the web shaped to form a tube are glued to the strip of film.

17. Use of the tubular casing as claimed in any of claims 1 to 11 for the manufacture of curved or ring-shaped sausages, wherein, in a manner which is customary per se, the tubular casing is filled with sausagemeat and is then scalded and/or smoked at a temperature at which shrinkage of the strip of film in the longitudinal direction under the action of heat is triggered off, and, if appropriate, the sausage casing is peeled off from the sausage.

**Revendications**

1. Boyau pour aliments, en particulier pour saucisses, constitué d'une pièce rectangulaire en forme de feuille ou de bande, ou d'une bande sans fin (4), à base de polymères naturels, qui est repliée autour de l'axe longitudinal et dont les régions marginales s'étendant dans le sens de l'axe longitudinal sont liées avec un joint collé, le boyau présentant au moins dans le domaine du joint collé une couche (5) qui contient une résine favorisant l'adhérence essentiellement insoluble dans l'eau, caractérisé en ce que les bords (1, 2) s'étendant dans le sens de l'axe longitudinal butent l'un contre l'autre ou se recouvrent et sont liés avec des bandes de pellicule (6) recouvrant les zones proches des bords, faites en une matière thermorétractable à 5 à 80%, principalement et au moins dans le sens de l'axe longitudinal du boyau à des températures entre 60 et 100° C, disposées sur le côté externe et/ou le côté interne du boyau, une couche (3) contenant un adhésif senisble à la pression se trouvant entre la (les) bande(s) de pellicule (6) et les régions proches des bords (1, 2) sétendant dans le sens de l'axe longitudinal, et en ce que la couche (5) favorisant l'adhérence est disposée entre la couche (3) contenant l'adhésif sensible à la pression et la pièce de feuille ou la bande (4).

2. Boyau suivant la revendication 1, caractérisé en ce que les zones proches des bords sont collées l'une avec l'autre avec recouvrement dans le sens longitudinal, la bande de pellicule en matière thermorétractable se trouvant entre les régions se recouvrant.

3. Boyau suivant la revendication 1, caractérisé en ce que les bords s'étendant dans le sens de l'axe longitudinal butent l'un contre l'autre et sont liés avec des bandes de pellicule en matière thermorétractable s'étendant dans le sens de l'axe longitudinal, recouvrant les régions proches des deux bords, du côté externe et/ou interne du boyau.

4. Boyau suivant l'une quelconque des revendications 1 à 3, caractérisé en ce qu'il est constitué de cellulose régénérée.

5. Boyau suivant l'une quelconque des revendications 1 à 4, caractérisé en ce que la résine insoluble dans l'eau favorisant l'adhérence contient ou est un polymère contenant des

groupes vinylidène, qui es ancré le cas échéant avec une résine, par exemple une résine thermodurcissable cationique durcie selon la revendication 8.

6. Boyau suivant l'une quelconque des revendications 1 à 4, caractérisé en ce que la bande de pellicule constituée d'une matière thermorétractable et les zones marginales de la pièce ou de la bande dans la zone de recouvrement de la bande de pellicule avec ces régions marginales se composent d'une matière perméable à la fumée et/ou présentent une structure perméable à la fumée, par exemple sous forme d'ouvertures, d'interruptions, de passages, de lacunes, de pores et de perforations, et en ce que la couche contenant de l'adhésif sensible à la pression présente entre la bande de pellicule et les zones marginales, pour l'amélioration de la perméabilité à la fumée, des interruptions ou des passages, par exemple sous la forme de pores, d'ouvertures, de lacunes ou de perforations, la bande de pellicule et/ou la couche contenant l'adhésif sensible à la pression ayant une perméabilité à la fumée améliorée contient ou est le cas échéant un produit textile en forme de feuille, une substance spongieuse, une mousse, une feuille microporeuse ou une membrane.

7. Boyau suivant l'une quelconque des revendications 1 à 6, caractérisé en ce que la résine insoluble dans l'eau favorisant l'adhérence sur la surface de la feuille contient ou est une résine thermodurcissable cationique durcie, en particulier une résine urée-formaldéhyde, mélamine-formaldéhyde, phénol-formaldéhyde ou un produit de condensation d'une polyamide-polyamine, d'une polyamine aliphatique ou d'un polyamide avec des halohydrines bifonctionnelles ou leurs dérivés, tels que l'épichlorhydrine.

8. Boyau suivant l'une quelconque des revendications 1 à 7, caractérisé en ce que l'adhésif sensible à la pression contient comme résine de base un ester d'acide polyacrylique ou un ester d'acide polyméthacrylique, de préférence des résines thermiquement et/ou chimiquement réticulables, en particulier un copolymère avec des comonomères réactifs, en particulier une résine à base d'un copolymère d'ester de l'acide acrylique contenant des groupes carboxyle.

9. Boyau suivant la revendication 8, caractérisé en ce que l'adhésif sensible à la pression contient une résine à base d'un homo- ou copolymère avec des comonomères d'ester de l'acide acrylique et d'acrylonitrile, en particulier un homo- ou copolymère d'ester butylique de l'acide acrylique et/ou d'ester 2-éthylhexylique de l'acide acrylique.

10. Boyau suivant l'une quelconque des revendications 1 à 9, caractérisé en ce qu'il est retroussé, le domaine de collage étant disposé en spirale autour de l'axe longitudinal du boyau retroussé au moins dans des parties du boyau.

11. Boyau suivant l'une quelconque des revendications 1 à 10, caractérisé en ce que la bande de pellicule se rétracte dans le domaine de températures de 60 à 100°C entre 5 et 80% dans le sens longitudinal.

12. Procédé de fabrication du boyau selon l'une quelconque des revendications 1 à 11, dans lequel on replie une pièce en forme de feuille ou de bande ou une bande sans fin autour de l'axe lingitudinal, on la façonne en une gaine et on colle les deux régions marginales s'étendant dans le sens de l'axe longitudinal qui se recouvrent avec une bande de pellicule disposée entre elles ou qui butent l'une contre l'autre avec des bandes de pellicules recouvrant les deux régions marginales, une couche favorisant l'adhérence ayant été appliquée sur les régions marginales au moins dans le domaine de collage, caractérisé en ce qu'avant, pendant ou après la formation de la gaine, on applique sur les surfaces à coller de la pièce ou de la bande et/ou de la bande de pellicule une solution ou dispersion contenant un adhésif sensible à la pression, on élimine le cas échéant le solvant ou l'agent dispersant et on forme le joint de collage, la bande de pellicule étant constituée d'une matière thermorétractable à 5 à 80%, principalement et au moins dans le sens de l'axe longitudinale, à des températures entre 60 et 100°C, et étant le cas échéant essentiellement perméable à la fumée en raison de sa structure et/ou de sa composition chimique.

13. Procédé suivant la revendication 12, caractérisé en ce que pour améliorer la perméabilité à la fumée, avant ou après la formation du joint collé, on munit la couche contenant l'adhésif sensible à la pression, qui se trouve sur la région marginale de la pièce ou de la bande s'étendant suivant l'axe longitudinal ou sur la bande de pellicule collant d'un côté ou des deux, le cas échéant aussi une des deux régions marginales et/ou la bande de pellicule, de passages sous forme d'ouvertures, de pores et/ou de perforations.

14. Procédé suivant l'une des revendications 12 ou 13, caractérisé en ce que les passages sont produits pendant et/ou après l'application de la couche contenant l'adhésif sensible à la pression sur la ou les région(s) (5) marginale(s) de la pièce ou de la bande ou sur la bande collant sur un côté ou sur les deux.

15. Procédé suivant l'une quelconque des revendications 12 à 14, caractérisé en ce que pour améliorer la perméabilité à la fumée, on applique la solution ou la dispersion contenant l'adhésif sensible à la pression avec des interruptions et/ou des lacunes, par exemple sous forme de bandes, de points ou de losanges, sur les surfaces à coller de la pièce ou de la bande et/ou la surface de la bande de pellicule recouvrant les deux régions marginales ou les surfaces de la bande de pellicule disposée entre les régions marginales se recouvrant, par exemple par des procédés de sérigraphie ou d'héliogravure.

16. Procédé suivant l'une quelconque des revendications 12 à 15, caractérisé en ce qu'on applique la solution ou la dispersion contenant l'adhésif sensible à la pression avec un ruban protecteur sur la ou les région(s) marginale(s)

et/ou sur la bande de pellicule, en ce qu'on retire le ruban protecteur avant ou pendant le façonnage de la gaine et en ce qu'on colle les régions marginales disposées de manière jointive de la feuille façonnée en gaine avec la bande de pellicule.

17. Utilisation du boyau selon l'une quelconque des revendications 1 à 11 pour la fabrication de saucisses recourbées ou de forme annulaire, dans laquelle on remplit le boyau de chair à saucisse d'une manière habituelle en soi, puis on l'échaude et/ou le fume à une température à laquelle le retrait à la chaleur de la bande de pellicule dans le sens longitudinal est déclenché, et le cas échéant en ce qu'on pèle l'enveloppe de la saucisse.

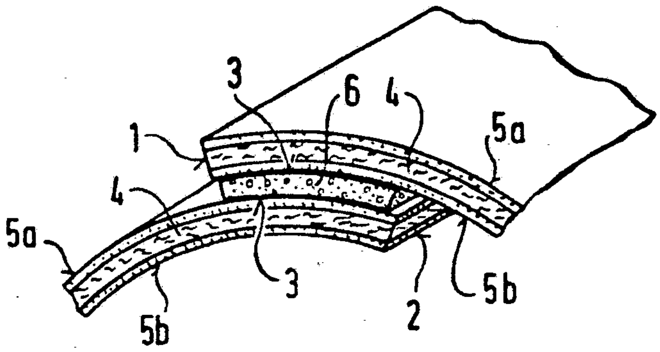


Fig. 1

Fig. 2

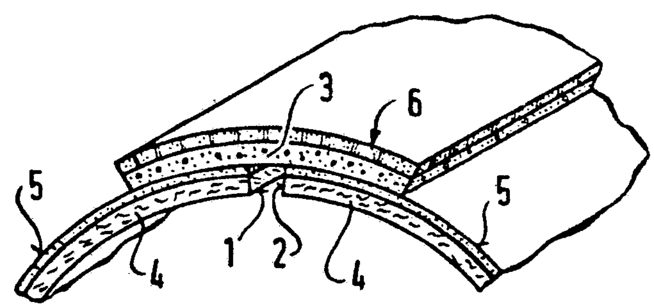


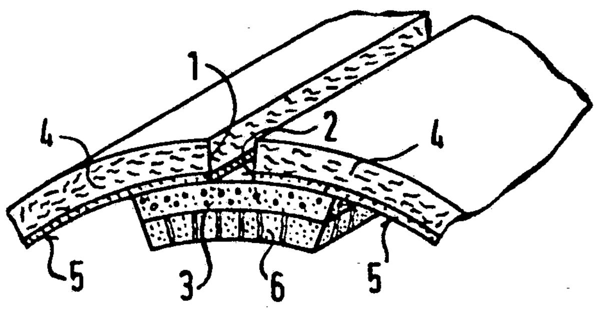


Fig. 3

Fig: 4

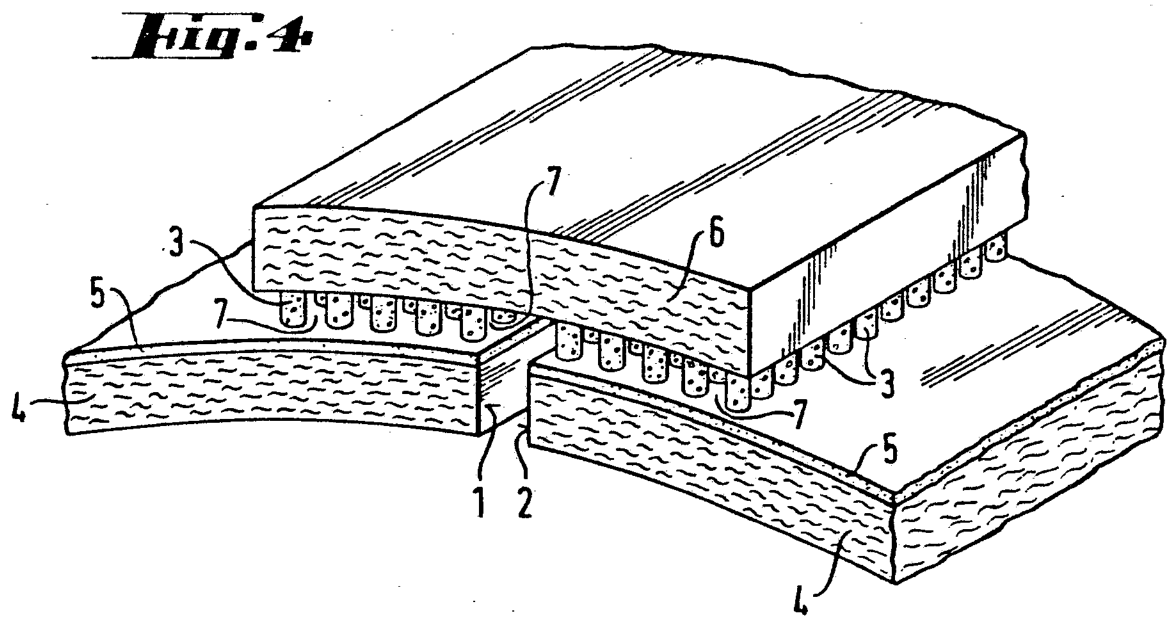


Fig: 5

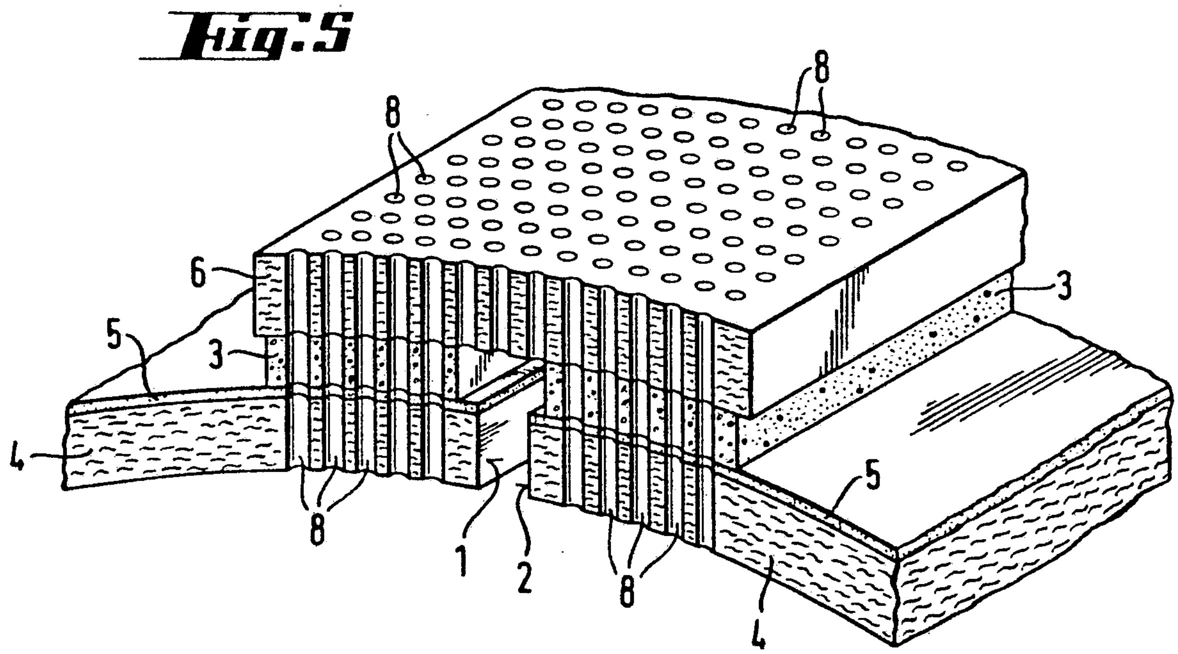

Fig. 6

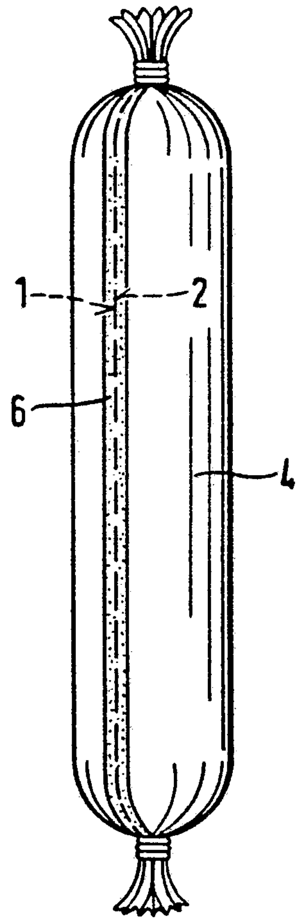


Fig. 7

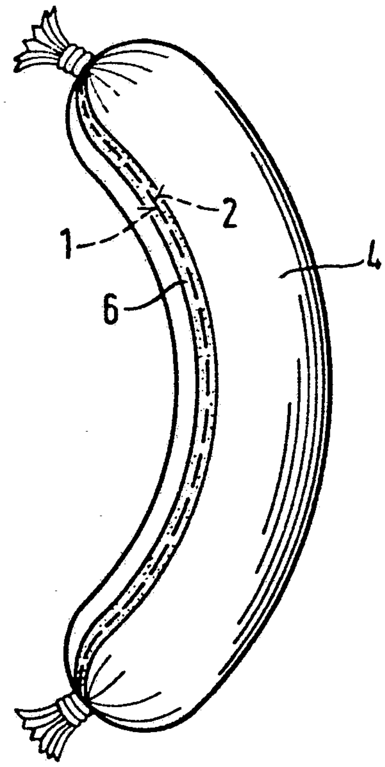

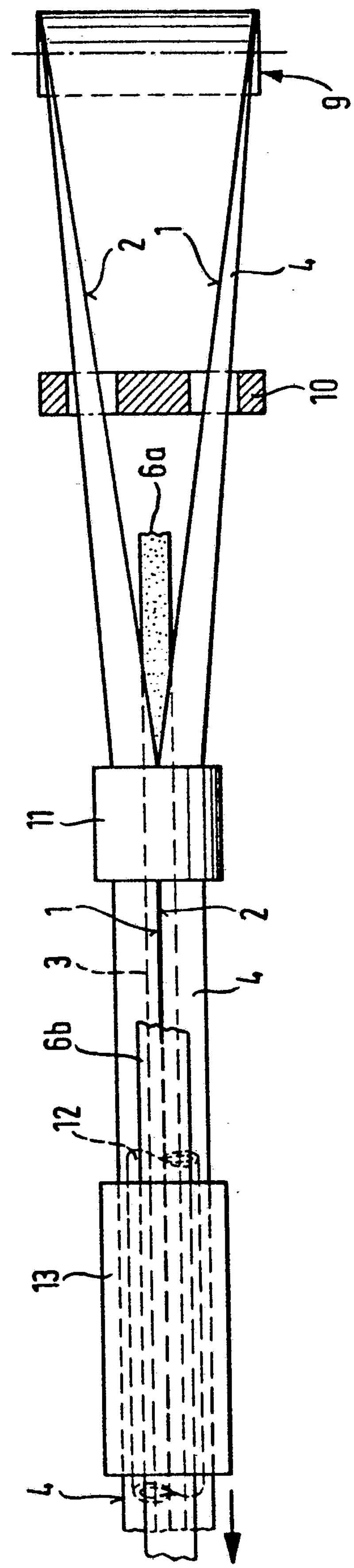


Fig. 8

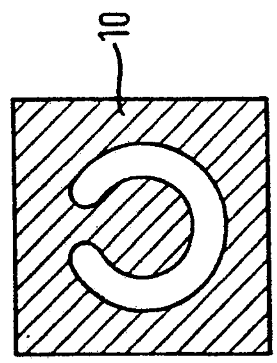


Fig. 8a

Fig. 9